# EUROPEAN PATENT SPECIFICATION

(11) **EP 4 120 141 B1**
(45) Date of publication and mention of the grant of the patent: **04.11.2026**
(21) Application number: 22770233.9
(22) Date of filing: 10.02.2022
(51) Int. Cl.: G06N 3/0464, G06N 3/063, G06F 17/15

(54) **METHOD AND APPARATUS FOR PERFORMING DECONVOLUTION PROCESSING ON FEATURE DATA BY UTILIZING CONVOLUTION HARDWARE**
VERFAHREN UND VORRICHTUNG ZUR DURCHFÜHRUNG EINER DEKONVOLUTIONSVERARBEITUNG AUF MERKMALSDATEN DURCH VERWENDUNG VON FALTUNGSHARDWARE
PROCÉDÉ ET APPAREIL PERMETTANT D'EFFECTUER UN TRAITEMENT DE DÉCONVOLUTION SUR DES DONNÉES DE CARACTÉRISTIQUES À L'AIDE D'UN MATÉRIEL DE CONVOLUTION

(30) Priority: 18.03.2021 CN 202110288755
(43) Date of publication of application: 18.01.2023
(73) Proprietor: Beijing Horizon Robotics Technology Research and Development Co., Ltd., Beijing 100094 (CN)
(72) Inventor: ZHAO, Zhuoran, Beijing 100094 (CN); YU, Kai, Beijing 100094 (CN); HUANG, Chang, Beijing 100094 (CN); WANG, Zhenjiang, Beijing 100094 (CN); LI, Jianjun, Beijing 100094 (CN); LI, Delin, Beijing 100094 (CN); ZHANG, Yinan, Beijing 100094 (CN)
(74) Representative: Kolster Oy Ab
(86) International application number: PCT/CN2022/075891
(87) International publication number: WO 2022/193877

(56) References cited:
- CN-A- 111 428 189
- CN-A- 111 932 437
- CN-A- 112 686 377
- US-A1- 2020 110 986
- US-A1- 2020 301 994
- LIN BAI ET AL: "A Unified Hardware Architecture for Convolutions and Deconvolutions in CNN", ARXIV.ORG, CORNELL UNIVERSITY LIBRARY, 201 OLIN LIBRARY CORNELL UNIVERSITY ITHACA, NY 14853, 29 May 2020 (2020-05-29), XP081685784
- DOMADIYA ASHISH ET AL: "Question Asked 9th Dec All Answers (1) Share Join for free Log in", 9 December 2018 (2018-12-09), XP093060526, Retrieved from the Internet <URL:https://www.researchgate.net/post/Algorithm-to-reduce-the-size-of-matrix-by-removing-all-rows-and-columns-from-it-which-has-zero-value-in-Modelica> [retrieved on 20230704]
- TU KAIJIE: "The Research of Deconvolutional Layer Acceleration Based on Classic CNN Accelerator", CHINESE MASTER'S THESES FULL-TEXT DATABASE, no. 01, 15 January 2020 (2020-01-15), pages 1 - 62, XP055967295, ISSN: 1674-0246

## Description

### RELATED APPLICATION INFORMATION

This application claims the priority to the Chinese patent application No. 202110288755.6, filed with the Chinese Patent Office on March 18, 2021 and entitled "METHOD AND APPARATUS FOR PERFORMING DECONVOLUTION PROCESSING ON FEATURE DATA BY USING CONVOLUTION HARDWARE" .

### FIELD OF THE INVENTION

The present disclosure relates to the technical field of artificial intelligence, and in particular, to a method and an apparatus for performing deconvolution processing on feature data by using convolution hardware, a device, and a storage medium.

### BACKGROUND OF THE INVENTION

Due to excellent dataset fitting capability and generalization capability, the convolutional neural network (CNN) algorithm has been widely used for analyzing vision, speech, sensor perception information, and high-level semantic information in the real world. Deconvolution is an operation that interpolates or upsamples images or feature data (which is also referred to as a "feature map"). With theoretical innovation and application development of deep learning, deconvolution is widely used in various novel convolutional neural network systems, to restore a low-resolution image to a high-resolution image, or to generate a high-dimensional feature map based on a low-dimensional feature map. It can be expected that deconvolution processing may be widely applied in the fields of image style transfer, ultra high resolution, object detection, semantic segmentation, instance segmentation, key point (including but not limited to human skeleton key point) detection, depth estimation, and the like.

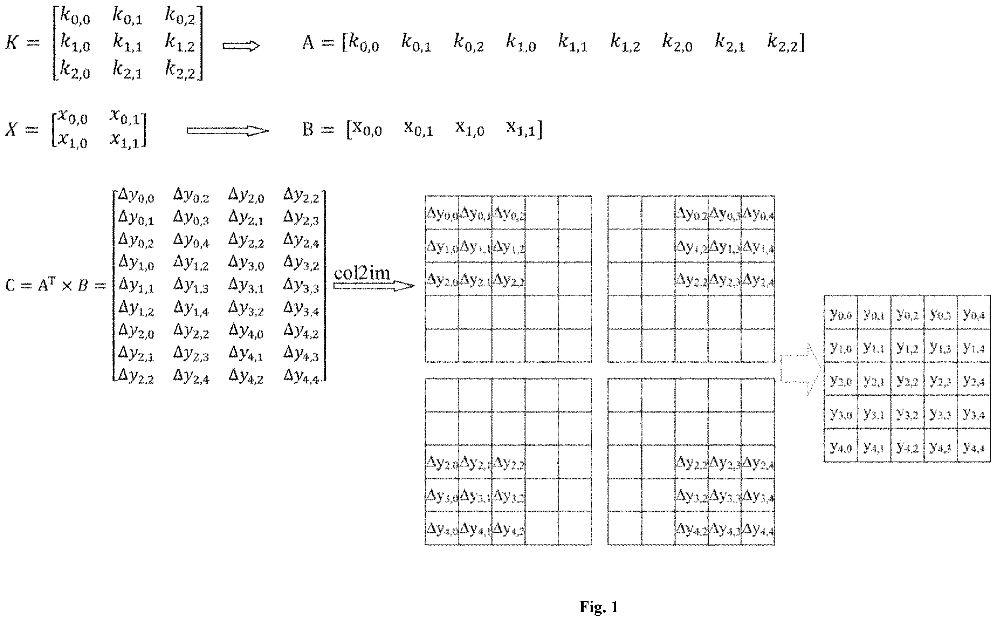

A general-purpose processor, such as a central processing unit (CPU) or a graphics processing unit (GPU), can be used to perform deconvolution processing on the feature map. The general-purpose processor can use a column-to-image (col2im) conversion method, where an example of the method is shown in FIG. 1. Referring to FIG. 1, in this example, a deconvolution kernel K is a 3×3 matrix, and an input feature map X is a 2×2 matrix. The deconvolution kernel K and the feature map X can be expanded into one-dimensional matrixes A and B, respectively. A 9×4 matrix C can be obtained by transposing the one-dimensional matrix A and multiplying the same with the other one-dimensional matrix B. Subsequently, according to the column-to-image conversion method, each column in the matrix C is converted into a two-dimensional image represented by a 3×3 matrix. Moreover, various matrixes are spliced according to a predetermined stride s_{w} in a width direction and a predetermined stride sₕ in a height direction, and overlapping parts are superimposed, so as to obtain an output feature map. In this example, the strides s_{w} and sₕ for splicing are both 2. For ease of understanding, a same subscript is used in the matrix C to indicate various pixels that may be superimposed on each other during splicing, and the obtained output feature map is a 5×5 matrix. Finally, the output feature map can also be tailored based on zero-padding parameters pₕ and p_{w} and output zero-padding parameters opₕ and op_{w} in a height (h) direction and a width (w) direction. P_{w} rows of pixels are tailored on the upper side, pₕ columns of pixels are tailored on the left side, (p_{w}-op_{w}) rows of pixels are tailored on the lower side, and (pₕ-opₕ) columns of pixels are tailored on the right side, so as to obtain a final deconvolutional output feature map.

Although the method in FIG. 1 can be implemented by using a general-purpose processor, the hardware architecture design of the general-purpose processor is not suitable for a large quantity of processing such as convolution, pooling, and deconvolution included in a neural network model, and operating efficiency is very low.

A paper of "A Unified Hardware Architecture for Convolutions and Deconvolutions in CNN" (Lin Bai, Yecheng Lyu and Xinming Huang, ARXIV. ORG, CORNELL UNIVERSITY LIBRARY, 201 OLIN LIBRARY CORNELL UNIVERSITY ITHACA, NY 14853, 29 May 2020 (2020-05-29), XP081685784) proposes a scalable neural network hardware architecture for image segmentation. By sharing the same computing resources, both convolution and deconvolution operations are handled by the same process element array. In addition, access to on-chip and off-chip memories is optimized to alleviate the burden introduced by partial sum.

A patent application publication US 2020/301994A1 discloses a method for performing a convolution transpose operation between an input tensor having a plurality of input elements and a filter comprising a plurality of filter weights, including dividing the filter into a plurality of sub-filters; performing, using hardware logic, a convolution operation between the input tensor and each of the plurality of sub-filters to generate a plurality of sub-output tensors, each sub-output tensor comprising a plurality of output elements; and interleaving, using hardware logic, the output elements of the plurality of sub-output tensors to form a final output tensor for the convolution transpose.

### SUMMARY OF THE INVENTION

To resolve the foregoing technical problem, the present disclosure provides the following technical solutions.

According to a first aspect, the present disclosure provides a method for performing deconvolution processing on a feature map, including: splitting a deconvolution kernel into a plurality of convolution kernels, and optimizing the convolution kernel to remove a row and/or column with an invalid weight. Convolution operation is performed by using a plurality of optimized convolution kernels and the corresponding feature map, and a plurality of obtained convolutional output feature maps are interleaved and tailored to obtain a deconvolutional output result. The solutions of the present disclosure can be implemented by using convolution hardware without dedicated deconvolution hardware, thereby reducing hardware complexity and saving chip area overhead and power consumption overhead. Moreover, according to the method of the present disclosure, a large quantity of invalid weights are removed through the optimization step, and thus operating efficiency of the relevant hardware can be greatly improved, thereby improving delay performance and energy consumption characteristics of the hardware.

According to an aspect of the present disclosure, a method for performing deconvolution processing on a feature map by using dedicated convolution hardware is provided, the dedicated convolution hardware including a multiply-add array and an on-chip memory.

The method includes: reading a feature map and a deconvolution kernel into an on-chip memory, and performing zero-padding processing on the feature map; determining a plurality of convolution kernels based on the deconvolution kernel; removing a row and/or column of each convolution kernel in which all elements are invalid weights, to obtain an optimized convolution kernel, and removing a corresponding row and/or column in the zero-padded feature map to obtain an optimized feature map corresponding to each optimized convolution kernel; performing convolution processing on each optimized convolution kernel and the corresponding optimized feature map by using the multiply-add array, to obtain a plurality of convolutional outputs; and performing interleaving synthesis processing on the plurality of convolutional outputs, to obtain an interleaving synthetic output, wherein the determining a plurality of convolution kernels based on the deconvolution kernel comprises: determining a quantity and sizes of convolution kernels corresponding to the deconvolution kernel, wherein the quantity of the convolution kernels is equal to a product of a stride in a height direction and a stride in a width direction that are used for deconvolution operation, a height size of the convolution kernel is a function of a height size of the deconvolution kernel and the stride in the height direction and a zero-padding parameter in the height direction that are used for deconvolution operation, and a width size of the convolution kernel is a function of a width size of the deconvolution kernel and the stride in the width direction and a zero-padding parameter in the width direction that are used for deconvolution operation; and for each position in each convolution kernel, determining two-dimensional coordinate values of a corresponding position in the deconvolution kernel based on two-dimensional indexes in the height direction and the width direction of the convolution kernel, the height size and the width size of the convolution kernel, two-dimensional coordinate values of the position, and the stride in the height direction, the stride in the width direction, the zero-padding parameter in the height direction, and the zero-padding parameter in the width direction that are used for deconvolution operation, and taking a weight value of the corresponding position as a weight value of the position in the convolution kernel, wherein when the determined two-dimensional coordinate values of the corresponding position in the deconvolution kernel exceeds a range of a position coordinate in the deconvolution kernel, a weight in the position of the convolution kernel is determined as a zero-valued invalid weight.

According to a second aspect, the present disclosure further provides an apparatus for performing deconvolution processing on a feature map by using dedicated convolution hardware, the dedicated convolution hardware including a multiply-add array and an on-chip memory.

The apparatus can include: a reading module configured to read the feature map and a deconvolution kernel into the on-chip memory; a zero-padding module configured to perform zero-padding processing on the feature map; a convolution module configured to perform convolution processing on each optimized convolution kernel and the correspond optimized feature map by using the multiply-add array, to obtain a plurality of convolutional outputs; and an interleaving synthesis module configured to perform interleaving synthesis processing on the plurality of convolutional outputs, to obtain an interleaving synthetic output, wherein the apparatus further comprises a convolution kernel generation module, configured to generate a plurality of convolution kernels based on the deconvolution kernel; and an optimization module, configured to remove a row and/or column of each convolution kernel in which all elements are invalid weights to obtain an optimized convolution kernel, and remove a corresponding row and/or column in a zero-padded feature map to obtain an optimized feature map corresponding to each optimized convolution kernel, wherein the convolution kernel generation module is configured to determine a quantity and sizes of convolution kernels corresponding to the deconvolution kernel, wherein the quantity of the convolution kernels is equal to a product of a stride in a height direction and a stride in a width direction that are used for deconvolution operation, a height size of the convolution kernel is a function of a height size of the deconvolution kernel and the stride in the height direction and a zero-padding parameter in the height direction that are used for deconvolution operation, and a width size of the convolution kernel is a function of a width size of the deconvolution kernel and the stride in the width direction and a zero-padding parameter in the width direction that are used for deconvolution operation; and for each position in each convolution kernel, determine two-dimensional coordinate values of a corresponding position in the deconvolution kernel based on two-dimensional indexes in the height direction and the width direction of the convolution kernel, the height size and the width size of the convolution kernel, two-dimensional coordinate values of the position, and the stride in the height direction, the stride in the width direction, the zero-padding parameter in the height direction, and the zero-padding parameter in the width direction that are used for deconvolution operation, and taking a weight value of the corresponding position as a weight value of the position in the convolution kernel, wherein when the determined two-dimensional coordinate values of the corresponding position in the deconvolution kernel exceeds a range of a position coordinate in the deconvolution kernel, a weight in the position of the convolution kernel is determined as a zero-valued invalid weight.

According to a third aspect, the present disclosure further provides an electronic device, including: a dedicated convolution hardware, including a multiply-add array and an on-chip memory; at least one off-chip memory, storing instructions; and at least one processor, where when the instructions are run by the processor, the electronic device is enabled to implement the method described above.

According to another aspect of the present disclosure, a computer readable storage medium is provided, wherein the computer readable storage medium stores computer program instructions. When the computer program instructions are run by an electronic device, the electronic device is enabled to implement the method described above,
wherein the electronic device further includes dedicated convolution hardware, the dedicated convolution hardware including a multiply-add array and an on-chip memory.

### BRIEF DESCRIPTION OF THE DRAWINGS

By describing the embodiments of the present disclosure more detailed with reference to the accompanying drawings, the foregoing and other objectives, features, and advantages of the present disclosure will become more apparent. The accompanying drawings are used to provide further understanding of the embodiments of the present disclosure, constituting a part of the specification, and are used to explain the present disclosure together with the embodiments of the present disclosure without constituting limitation to the present disclosure. In the accompanying drawings, the same reference numerals generally represent the same components or steps.
FIG. 1 shows a schematic diagram of a method suitable for performing deconvolution processing on a feature map by using general-purpose hardware;
FIG. 2 shows a schematic diagram of a method suitable for performing deconvolution processing on a feature map by using deconvolution hardware;
FIG. 3 shows a schematic diagram of a method suitable for performing deconvolution processing on a feature map by using convolution hardware;
FIG. 4 shows a flowchart of a method for performing deconvolution processing on a feature map by using convolution hardware according to an exemplary embodiment;
FIG. 5 shows a schematic diagram of performing deconvolution processing on a feature map according to the method shown in FIG. 4;
FIG. 6 shows a functional block diagram of an apparatus for performing deconvolution processing on a feature map according to an exemplary embodiment;
FIG. 7 shows a structural block diagram of an electronic device according to an exemplary embodiment; and
FIG. 8 shows a structural block diagram of a convolution hardware accelerator that can be used in the electronic device in FIG. 7 according to an exemplary embodiment.

### DETAILED DESCRIPTION OF THE EMBODIMENTS

Exemplary embodiments of the present disclosure are described below in detail with reference to the accompanying drawings. Obviously, the described embodiments are merely a part, rather than all of embodiments of the present disclosure. It should be understood that the present disclosure is not limited by the exemplary embodiments described herein.

### Application overview

To improve processing performance of a processor, a general-purpose processor is generally required to have high computing performance, a large-capacity cache and memory; but this can lead to very high energy consumption and hardware costs. Therefore, the general-purpose processor is not suitable for use in a terminal device. To overcome these shortcomings of the general-purpose processor, a dedicated hardware accelerator has been developed, which is suitable for performing convolution, pooling, deconvolution, and other processing in a sliding window manner. The dedicated hardware accelerator has high operating efficiency and very low power consumption, and therefore it is very suitable for use in a terminal device.

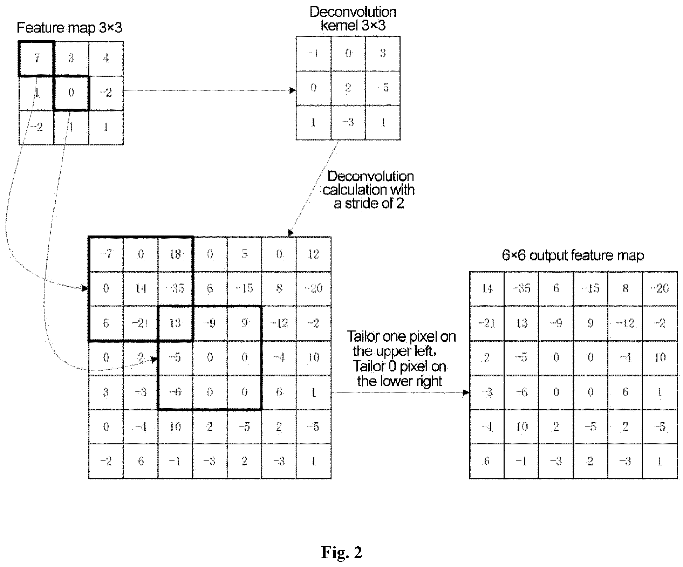

FIG. 2 shows a method that is suitable for performing deconvolution processing on a feature map and that is implemented by using a dedicated hardware accelerator. In an example of FIG. 2, a feature map and a deconvolution kernel both are 3×3 matrixes. The method includes multiplying each value in the feature map with the deconvolution kernel respectively, to obtain a plurality of output matrixes having a same size (kₕ, k_{w}), where kₕ represents a height size of the deconvolution kernel and k_{w} represents a width size of the deconvolution kernel. Subsequently, the plurality of obtained output matrixes are spliced according to a stride sₕ in a height direction and a stride s_{w} in a width direction. The strides sₕ and s_{w} both are 2 in this example. Overlapping parts are accumulated to obtain a synthetic feature map of a size of 7×7.

For example, in the example of FIG. 2, a product of a numerical value "7" in the first row and first column of the feature map and a weight value "3" in the first row and third column of the deconvolution kernel, and a product of a numerical value "3" in the first row and second column of the feature map and a weight value "-1" in the first row and first column of the deconvolution kernel can be accumulated when splicing is performed according to that the strides satisfy that sₕ=2 and s_{w}=2, to obtain a value "18" in the first row and third column of the synthetic feature map. A product of a numerical value "7" in the first row and first column of the feature map and a weight value "1" in the third row and third column of the deconvolution kernel, a product of a numerical value "3" in the first row and second column of the feature map and a weight value "1" in the third row and first column of the deconvolution kernel, a product of a numerical value "1" in the second row and first column of the feature map and a weight value "3" in the first row and third column of the deconvolution kernel, and a product of a numerical value "0" in the second row and second column of the feature map and a weight value "-1" in the first row and first column of the deconvolution kernel can be accumulated when splicing is performed according to that the strides satisfy that sₕ=2 and s_{w}=2, to obtain a value "13" in the third row and third column of the synthetic feature map. Other numerical values in the feature map can be multiplied and spliced with the deconvolution kernel in a similar way, and details are not described herein.

Subsequently, the synthetic feature map is tailored based on zero-padding parameters pₕ and p_{w} and output zero-padding parameters opₕ and op_{w} in the height direction and the width direction, to obtain a final deconvolutional output feature map. In this example, the zero-padding parameters pₕ and p_{w} and the output zero-padding parameters opₕ and op_{w} all are 1. Therefore, p_{w}=1 line of pixels are tailored on the upper side, pₙ=1 column of pixels are tailored on the left side, (p_{w}-op_{w})=0 line of pixels are tailored on the lower side, and (pₕ-opₕ)=0 column of pixels are tailored on the right side. The obtained deconvolutional output feature map is a matrix with a size of 6×6.

The method shown in FIG. 2 may be implemented by using a dedicated hardware accelerator. However, the dedicated hardware accelerator is generally designed for a specific calculation process. The deconvolution processing shown in FIG. 2 is different from general convolution processing. Therefore, when a dedicated hardware accelerator is used to implement the method of FIG. 2, dedicated deconvolution hardware that is different from convolution hardware needs to be designed. An array composed of multipliers and adders (which is generally referred to as a multiply-add array MAC) and an on-chip cache (which is generally a static random access memory SRAM) used for the array need to be designed for the processing described above with reference to FIG. 2. In other words, a separate convolution module and a separate deconvolution module need to be designed on the dedicated hardware accelerator. In this case, hardware complexity may be increased, and additional chip area overhead and power consumption overhead may be brought in.

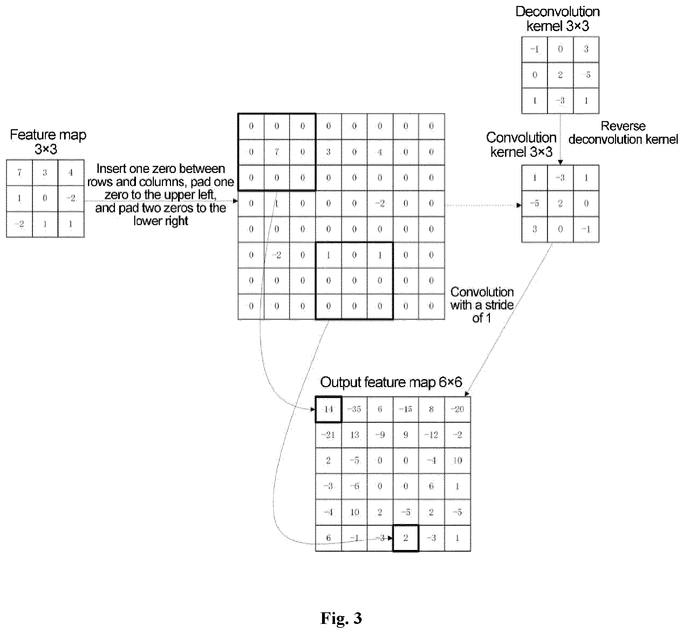

Therefore, it is expected that convolution operations and deconvolution operations can be performed by using simple hardware. FIG. 3 shows a method for performing deconvolution processing based on a sliding-window convolution operation. The method for deconvolution processing involves only convolution operations, and therefore can be implemented by using dedicated convolution hardware without dedicated deconvolution hardware or modules. In the method of FIG. 3, for example, the feature map is a matrix with a size h×w of 3×3 , the convolution kernel is a matrix with a size kₕ×k_{w} of 3×3, sliding strides sₕ and s_{w} both are 2, the zero padding parameters pₕ and p_{w} both are 1, and the output zero-padding parameters opₕ and op_{w} both are 1.

Referring to FIG. 3, first, the feature map is performed with sparse processing. Specifically, (sₕ-1)=1 row of zero pixels may be added between rows of the feature map, (s_{w}-1)=1 column of zero pixels may be added between columns, (kₕ-1-pₕ)=1 row of zero pixels may be added on the upper side, (k_{w}-1-p_{w})=1 column of zero pixels may be added on the left side, (kₕ-1-pₕ+opₕ)=2 rows of zero pixels may be added on the lower side, and (k_{w}-1-p_{w}+op_{w})=2 columns of zero pixels may be added on the right side. Moreover, the weight values in the deconvolution kernel are reversed. In other words, by using a center pixel as a center, the weight values with symmetrical positions are exchanged. Subsequently, the reversed deconvolution kernel is used to perform a convolution operation with a stride (1, 1) on the sparse feature map, and an obtained output result is a deconvolutional calculation result.

Although the method for deconvolution processing of FIG. 3 can be implemented by using convolution hardware without a dedicated deconvolution acceleration module, a large quantity of zero-valued pixels are inserted during the sparse processing. Therefore, only about 1/(sₕ*s_{w}) calculations are valid, and about (sₕ*s_{w}-1)/(sₕ*s_{w}) calculations are all invalid. Taking sₕ=s_{w}=2 as an example, about 75% of the calculations are invalid, which results in great delay and energy consumption of the hardware accelerator. Moreover, according to the method of FIG. 3, at least on-chip cache SRAM space that is (sₕ*s_{w}) times of the size of the feature map is required, having relatively high requirements on hardware.

Therefore, it is still expected to provide an improved solution for deconvolution processing. The solution can be implemented based on convolution hardware without dedicated deconvolution hardware, and can further improve operating efficiency of the relevant hardware.

A hardware architecture design of the general-purpose processor is not suitable for convolution, pooling, deconvolution, and other processing included in a neural network model in a large quantity. As a result, the operating efficiency is very low.

In addition, when the neural network model is run by using a dedicated hardware accelerator, although efficiency can be greatly improved, generally particular hardware needs to be designed for specific processing. For example, a separate convolution module and a separate deconvolution module need to be designed for convolution processing and deconvolution processing, resulting in high hardware complexity and bringing in additional chip area overhead and power consumption overhead.

Although a method of performing deconvolution processing by using convolution hardware has been proposed at present, the method includes a large quantity of invalid operations, resulting in great delay and energy consumption of the hardware accelerator. Moreover, additional on-chip cache space is required, and requirements on hardware are relatively high.

The present disclosure provides a method for performing deconvolution processing on a feature map, to resolve the foregoing technical problems. In the embodiments of the present disclosure, a deconvolution kernel can be split into a plurality of convolution kernels, and each convolution kernel can be optimized to remove invalid weights thereof, to obtain an optimized convolution kernel.

In addition, according to the method, the feature map is correspondingly optimized, to obtain an optimized feature map corresponding to each optimized convolution kernel. A plurality of convolutional outputs are obtained by performing convolution operations by using each optimized convolution kernel and the feature map. The plurality of convolutional outputs may be performed with interleaving synthesis; and optionally, may be tailored, to obtain a deconvolutional output feature map with an expected size.

The method of the present disclosure can be implemented by using convolution hardware without dedicated deconvolution hardware. Therefore, hardware complexity is reduced, and chip area overhead and power consumption overhead are saved. Moreover, according to the method of the present disclosure, a large quantity of invalid operations are also reduced through optimization, thereby further improving the operating efficiency of the hardware accelerator, improving delay and energy consumption characteristics, and reducing requirements for on-chip cache space, which helps reduce hardware costs.

### Exemplary method

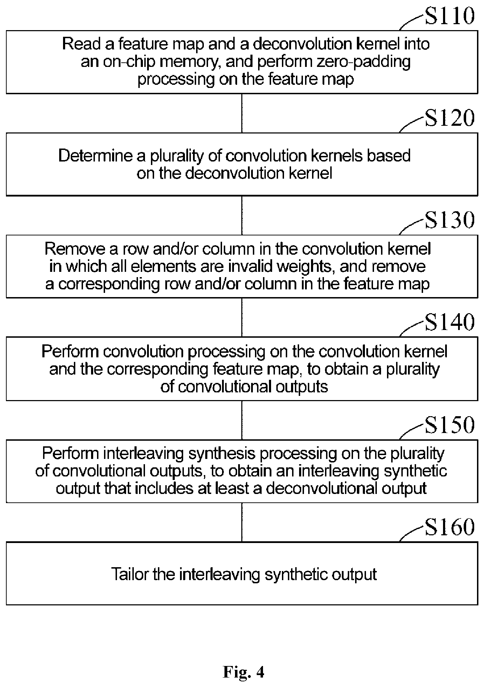

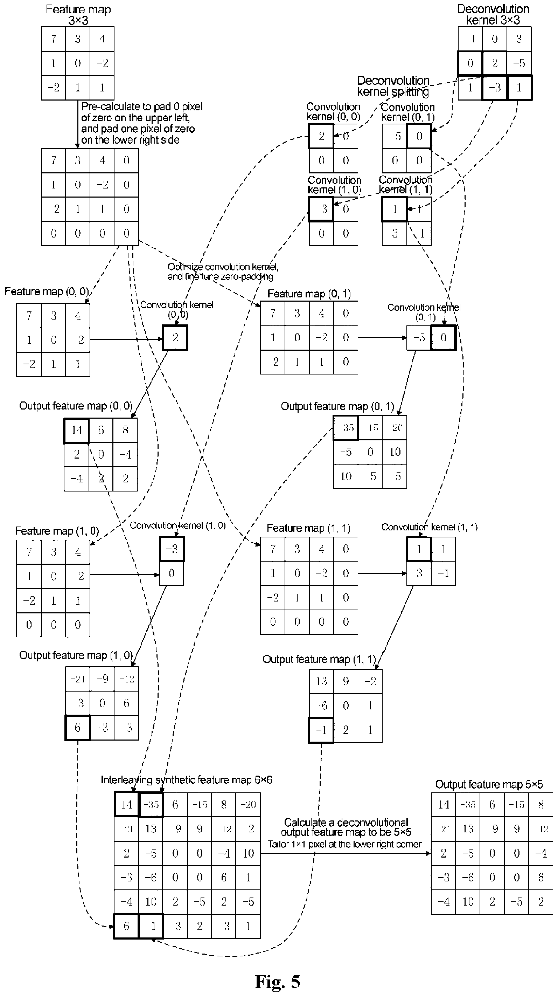

FIG. 4 shows a flowchart of a method 100 for performing deconvolution processing on a feature map by using convolution hardware according to an exemplary embodiment of the present disclosure. FIG. 5 shows a schematic diagram of performing deconvolution processing on a feature map according to the method 100 shown in FIG. 4. The convolution hardware may include a multiply-add array (MAC) and an on-chip memory, such as a static random access memory (SRAM).

For ease of description, parameters related to the deconvolution operation are predefined in the present disclosure, including a size (h, w) of an input feature map, a size (kₕ, k_{w}) of a deconvolution kernel, sliding stride (sₕ, s_{w}), zero padding (pₕ, p_{w}), and output zero padding (opₕ, op_{w}), where h indicates a height dimension of the feature map and w indicates a width dimension of the feature map.

Referring to FIG. 4, the method 100 may include step S110: reading a feature map and a deconvolution kernel into an on-chip memory, and performing zero-padding processing on the feature map. In the example of FIG. 5, the feature map is represented as a 3×3 matrix, and the deconvolution kernel is also represented as a 3×3 matrix. Certainly, this is only an example size, and the present disclosure is not limited thereto.

In addition, zero-padding processing can be performed on the feature map in various flexible manners. For example, zero padding is performed on the feature map while the feature map is read into the on-chip memory, or zero padding is performed on the feature map after the feature map is read into the on-chip memory, or zero padding is performed on the feature map when the feature map is read from the on-chip memory for use in, for example, convolution operations or other processing.

In an exemplary embodiment, different from commonly used symmetrical zero-padding, zero padding may be performed on the feature map in four directions, respectively. Specifically, an upper-side quantity for zero padding ${p}_{ht}^{′}$ and a lower-side quantity for zero padding ${p}_{hb}^{′}$ of the feature map may be determined based on a height size of the deconvolution kernel and a stride in a height direction and a zero-padding parameter in the height direction that are used for deconvolution operation, where the lower-side quantity for zero padding ${p}_{hb}^{′}$ is one more row than the upper-side quantity for zero padding ${p}_{ht}^{′}$*.*

Similarly, a left-side quantity for zero padding ${p}_{wl}^{′}$ and a right-side quantity for zero padding ${p}_{wr}^{′}$ of the feature map may be determined based on a width size of the deconvolution kernel and a stride in a width direction and a zero-padding parameter in the width direction that are used for deconvolution operation, where the right-side quantity for zero padding ${p}_{wr}^{′}$ is one more column than the left-side quantity for zero padding ${p}_{wl}^{′}$. For example, the upper-side quantity for zero padding ${p}_{ht}^{′}$*,* the left-side quantity for zero padding ${p}_{wl}^{′}$, the lower-side quantity for zero padding ${p}_{hb}^{′}$*,* and the right-side quantity for zero padding ${p}_{wr}^{′}$ of the feature map may be calculated respectively according to the following formulas 1 to 4, where floor is a rounded-down function, ceil is a rounded-up function, kₕ and k_{w} respectively represent the height size and the width size of the deconvolution kernel, sₕ and s_{w} respectively represent the stride in the height direction and the stride in the width direction, and pₕ and p_{w} respectively represent the zero-padding parameter in the height direction and the zero-padding parameter in the width direction that are used for deconvolution operation. Specific formulas are as follows: ${p}_{ht}^{′} = floor \left(\frac{{k}_{h} - 1 - {p}_{h}}{{s}_{h}}\right)$ (Formula 1) ${p}_{wl}^{′} = floor \left(\frac{{k}_{w} - 1 - {p}_{w}}{{s}_{w}}\right)$ (Formula 2) ${p}_{hb}^{′} = ceil \left(\frac{{k}_{h} - 1 - {p}_{h}}{{s}_{h}}\right)$ (Formula 3) ${p}_{wr}^{′} = ceil \left(\frac{{k}_{w} - 1 - {p}_{w}}{{s}_{w}}\right)$ (Formula 4)

In the example of FIG. 5, values of relevant parameters are respectively h=w=3, kₕ=k_{w}=3, sₕ=s_{w}=2, pₕ=p_{w}=1, and opₕ=op_{w}=0. According to the foregoing formulas 1 to 4, it can be determined through calculations that the upper-side quantity for zero padding and the left-side quantity for zero padding are zero, that is, zero padding is not required; and the lower-side quantity for zero padding and the right-side quantity for zero padding are 1. Therefore, the zero-padded feature map becomes a 4×4 matrix, as shown in FIG. 5.

In Step S120, a plurality of convolution kernels are determined based on the deconvolution kernel.

First, a quantity and sizes of convolution kernels corresponding to the deconvolution kernel may be determined. Specifically, the quantity of the convolution kernels may be determined as a product sₕ×s_{w} of the stride in the height direction sₕ and the stride in the width direction s_{w} that are used for deconvolution operation, and two-dimensional indexes (isₕ, is_{w}) in the height direction and the width direction may be allocated to each convolution kernel. In the example of FIG. 5, due to sₕ=s_{w}=2, it can be determined that the quantity of the convolution kernels corresponding to the deconvolution kernel is 4, and the four convolution kernels may be respectively allocated with two-dimensional indexes (0, 0), (0, 1), (1, 0), and (1, 1).

A size ${k}_{h}^{′}$ of each convolution kernel in the height direction may be determined based on the height size kₕ of the deconvolution kernel and the stride in the height direction sₕ and the zero-padding parameter in the height direction pₕ that are used for deconvolution operation. Similarly, a size ${k}_{w}^{′}$ of each convolution kernel in the width direction may be determined based on the width size k_{w} of the deconvolution kernel and the stride in the width direction s_{w} and the zero-padding parameter in the width direction p_{w} that are used for deconvolution operation. For example, the height and width sizes ( ${k}_{h}^{′} , {k}_{w}^{′}$) of each convolution kernel may be determined according to the following formulas 5 and 6, where ceil is a rounded-up function, and % is a remainder operator. In the example of FIG. 5, by using values of the parameters defined above, it can be determined through calculation that the sizes of each convolution kernel satisfy that ${k}_{h}^{′} = 2$ and ${k}_{w}^{′} = 2$*.* ${k}_{h}^{′} = ceil \left(\frac{{k}_{h} + {p}_{h} {%s}_{h}}{{s}_{h}}\right)$ (Formula 5) ${k}_{w}^{′} = ceil \left(\frac{{k}_{w} + {p}_{w} {%s}_{w}}{{s}_{w}}\right)$ (Formula 6)

In step S120, after the quantity and sizes of the convolution kernels are determined, a weight value of each convolution kernel is further determined.

Specifically, a possible implementation includes that for each position in each convolution kernel, two-dimensional coordinate values of a corresponding position in the deconvolution kernel may be determined based on two-dimensional indexes in the height direction and the width direction of the convolution kernel, the height size and the width size of the convolution kernel, two-dimensional coordinate values of the position, and the stride in the height direction, the stride in the width direction, the zero-padding parameter in the height direction, and the zero-padding parameter in the width direction that are used for deconvolution operation. A weight value of the corresponding position is taken as a weight value of the position in the convolution kernel. For example, for each position ( ${ik}_{h}^{′} , {ik}_{w}^{′}$) in each convolution kernel (isₕ, is_{w}), a corresponding position (ikₕ, ik_{w}) in the deconvolution kernel may be determined according to the following formulas 7 and 8, and a weight value of this position may be taken as a weight value of the position ( ${ik}_{h}^{′} , {ik}_{w}^{′}$) in the convolution kernel, where isₕ and is_{w} respectively are indexes of each convolution kernel in the height direction and the width direction, ${ik}_{h}^{′}$ and ${ik}_{w}^{′}$ respectively are a position coordinate in the height direction and a position coordinate in the width direction in the convolution kernel, and ikₕ and ik_{w} respectively are a position coordinate in the height direction and a position coordinate in the width direction in the deconvolution kernel.

When the determined corresponding position (ikₕ, ik_{w}) in the deconvolution kernel exceeds a range of a position coordinate in the deconvolution kernel, a zero value is inserted at the position ( ${ik}_{h}^{′} , {ik}_{w}^{′}$) of the convolution kernel. In other words, a weight at the position is a zero-valued invalid weight. ${ik}_{h} = \left({k}_{h}^{′}-1-{ik}_{h}^{′}\right) \times {s}_{h} + {is}_{h} - {p}_{h} {%s}_{h}$ (Formula 7) ${ik}_{w} = \left({k}_{w}^{′}-1-{ik}_{w}^{′}\right) \times {s}_{w} + {is}_{w} - {p}_{w} {%s}_{w}$ (Formula 8)

For example, referring to the example of FIG. 5, when a weight value in a convolution kernel (isₕ=0, is_{w}=0) is calculated, for a position ( ${ik}_{h}^{′} = 0 , {ik}_{w = 0}^{′}$), by substituting relevant parameters isₕ=is_{w}=0, ${ik}_{h}^{′} = {ik}_{w}^{′} = 0$*,* k'ₕ=k'_{w}=2, sₕ=s_{w}=2, and pₕ=p_{w}=1 into the foregoing formulas 7 and 8, it can be calculated that a corresponding position in the deconvolution kernel is (ikₕ=1, ik_{w}=1), and a weight value at this position is "2". Therefore, a weight value at the position (0, 0) in the convolution kernel (0, 0) is "2".

For a position ( ${ik}_{h}^{′} = 0 , {ik}_{w}^{′} = 1$), by substituting relevant parameters isₕ=is_{w}=0, ${ik}_{h}^{′} = 0 , {ik}_{w}^{′} = 1$*,* k'ₕ=k'_{w}=2, sₕ=s_{w}=2, and pₕ=p_{w}=1 into the foregoing formulas 7 and 8, it can be calculated that a corresponding position in the deconvolution kernel is (ikₕ=1, ik_{w}=-1). Since this coordinate value exceeds a coordinate range of the deconvolution kernel (in the example of FIG. 5, a row coordinate range is from 0 to 2 and a column coordinate range is from 0 to 2), a zero-valued invalid weight is inserted at this position.

Similarly, for positions ( ${ik}_{h}^{′} = 1 , {ik}_{w}^{′} = 0$) and ( ${ik}_{h}^{′} = 1 , {ik}_{w}^{′} = 1$), corresponding calculated coordinate positions in the deconvolution kernel respectively are (ikₕ=-1, ik_{w}=1) and (ikₕ=-1, ik_{w}=-1), and both exceed the coordinate range of the deconvolution kernel. Therefore, zero-valued invalid weights are also inserted at these positions, so as to obtain various weight values of the convolution kernel (0, 0) shown in FIG. 5.

Similarly, in a convolution kernel (isₕ=0, is_{w}=1), for a position ( ${ik}_{h}^{′} = 0$, ${ik}_{w}^{′} = 0$), a corresponding position in the deconvolution kernel that is calculated according to formulas 7 and 8 is (ikₕ=1, ik_{w}=2), and a weight value at this position is "-5"; for a position ( ${ik}_{h}^{′} = 0 , {ik}_{w}^{′} = 1$), a corresponding calculated position in the deconvolution kernel is (ikₕ=1, ik_{w}=0), and a weight value at this position is "0"; and for positions ( ${ik}_{h}^{′} = 1 , {ik}_{w}^{′} = 0$) and ( ${ik}_{h}^{′} = 1 , {ik}_{w}^{′} = 1$), corresponding calculated coordinate positions in the deconvolution kernel respectively are (ikₕ=-1, ik_{w}=2) and (ikₕ=-1, ik_{w}=0), and both exceed the coordinate range of the deconvolution kernel. Therefore, zero-valued invalid weights are inserted at these positions, so as to obtain the various weight values of the convolution kernel (0, 1) shown in FIG. 5.

Similarly, in the convolution kernel (isₕ=0, is_{w}=1), two weight values "-3 and 0" in the first column are weight values determined from the corresponding positions in the deconvolution kernel according to the foregoing calculations, and two weight values in the second column are zero-valued invalid weights that are inserted because calculated coordinate values exceed the coordinate range of the deconvolution kernel.

In a convolution kernel (isₕ=1, is_{w}=1), four weight values "1, 1, 3, and -1" are all weight values determined from the corresponding positions in the deconvolution kernel according to the foregoing calculations, and no zero-valued invalid weight is inserted. Herein, it should be noted that a zero-valued weight determined from the deconvolution kernel (that is, the deconvolution kernel includes a zero-valued weight) is a valid weight, and a zero-valued weight that is inserted merely because a calculated position coordinate exceeds a range is an invalid weight.

In some embodiments, to distinguish between an inserted zero-valued invalid weight and a zero-valued valid weight initially included in the deconvolution kernel, a mark may also be attached to the inserted zero-value invalid weight to indicate that the inserted zero-value invalid weight is an invalid weight. Alternatively, a mark may also be attached to each weight value in the convolution kernel, to indicate that the weight value is a valid weight or an invalid weight. For example, the mark may be a bit, where "0" indicates that a corresponding weight is an invalid weight, and "1" indicates that a corresponding weight is a valid weight, or vice versa. The indication bit may be stored with the corresponding weight value, to serve as, for example, an additional lowest-order bit or a highest-order bit of the weight value. Alternatively, a bit map may be formed and may be stored separately from the convolution kernel.

Herein, a plurality of convolution kernels are determined based on the deconvolution kernel. It should be understood that when the deconvolution kernel includes a bias value, the plurality of convolution kernels determined based on the deconvolution kernel may have the same bias value.

In the plurality of convolution kernels determined above, a large quantity of invalid weights may be included. Therefore, in step S130, each convolution kernel is further optimized, to remove a row and/or column of each convolution kernel in which all elements are invalid weights to obtain an optimized convolution kernel, and correspondingly remove a corresponding row and/or column in the zero-padded feature map to obtain an optimized feature map corresponding to each optimized convolution kernel.

For example, when an indication bit is set for each zero-valued weight in the convolution kernel as described above, whether a row or a column of weight values in the convolution kernel are all zeros can be first determined. If a row or a column includes at least one non-zero weight value, the row or column cannot be removed through optimization. If weight values in a row or column are all zeros, whether the weight values are valid zero values or invalid zero values may be determined based on an indicator associated with the zero value. Merely when weights in a row or column are all invalid zero values, the row or column may be removed through optimization.

In some other embodiments, if all weights (including zero-valued weights and non-zero-valued weights) in the convolution kernel are set with indication bits indicating whether the weights are valid weights, whether weights in a row or column in the convolution kernel are all invalid weights may be directly determined based on these indication bits. When weights in a row or column in the convolution kernel are all invalid weights, the row or column may be removed through optimization.

It can be learned that in step S130, optimized feature maps determined for various optimized convolution kernels may be different from each other. For example, referring to the example of FIG. 5, for the convolution kernel (0, 0), a column on the right side and a row on the lower side are all zero-valued invalid weights and are removed through optimization, with only a valid weight value "2" remained. Correspondingly, a column on the right side and a row on the lower side of the zero-padded feature map are removed through optimization to obtain an optimized feature map (0, 0) that is used for the convolution kernel (0, 0), where the optimized feature map (0, 0) is a 3×3 matrix. For the convolution kernel (0, 1), a row on the lower side only includes zero-valued invalid weights, and therefore is removed through optimization, with only two valid weight values "-5 and 0" in the first row remained. Correspondingly, a row on the lower side of the zero-padded feature map is removed through optimization to obtain an optimized feature map (0, 1) that is used for the convolution kernel (0, 1), where the optimized feature map (0, 1) is a 3×4 matrix.

Similarly, for the convolution kernel (1, 0), a column on the right side only includes zero-valued invalid weights, and therefore is removed through optimization, with only two valid weight values "-3 and 0" in the first column remained. Correspondingly, a column on the right side of the zero-padded feature map is removed through optimization to obtain an optimized feature map (1, 0) that is used for the convolution kernel (1, 0), where the optimized feature map (1, 0) is a 4×3 matrix. The convolution kernel (1, 1) does not include any zero-valued invalid weight, and therefore no rows or columns are removed through optimization. For a corresponding feature map (1, 1) of the convolution kernel (1, 1), no rows or columns are removed, either. The feature map (1, 1) is the zero-padded feature map, and is a 4×4 matrix.

It can be learned that, through the optimization in step S130, invalid operation in the deconvolution processing can be almost completely eliminated, thereby improving operating efficiency of the relevant hardware and improving delay and energy consumption.

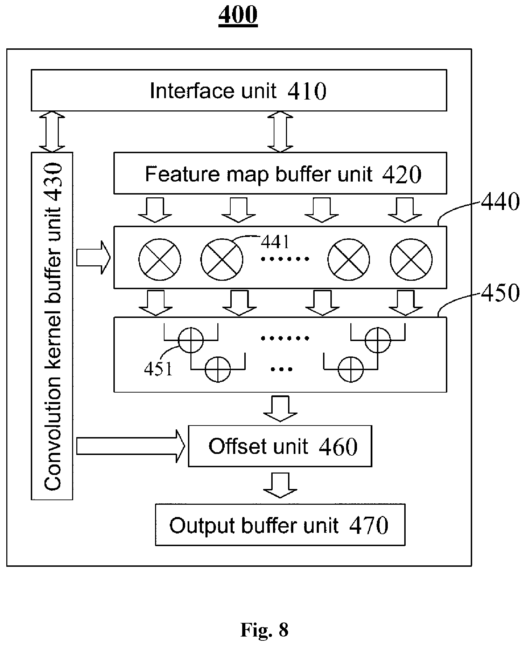

Subsequently, in step S140, convolution processing may be performed on each optimized convolution kernel and the corresponding optimized feature map by using the multiply-add array of the convolution hardware, to obtain various corresponding convolutional outputs. For example, as described in detail below with reference to FIG. 8, each weight value in the convolution kernel and feature data in the corresponding feature map are provided to a multiplier in the multiply-add array. Multiplication is completed in the multiplier, and then a result is output to an adder to be accumulated with outputs of other multipliers.

Optionally, a result obtained through accumulation may also be linearly adjusted by using an offset value of the convolution kernel, and an obtained adjusted value can be stored in the on-chip memory SRAM as an output value of the convolution operation. In some embodiments, according to a sliding window method, the convolution kernel may be sequentially convolved with feature data in a corresponding window on the feature map, to calculate various feature data in an output feature map.

In step S140, optionally, a quantity of multipliers included in the multiply-add array of the convolution hardware is larger than or equal to a quantity of weight values included in each optimized convolution kernel. In this case, convolution operations of one sliding window can be completed at one time, thereby ensuring high computational efficiency.

It should be noted that the quantity of the multipliers in the multiply-add array can be smaller than the quantity of the weight values in the deconvolution kernel. In other words, according to this embodiment, relatively more deconvolution processing can be implemented by using relatively few hardware resources. For example, in the example shown in FIG. 5, the deconvolution kernel includes nine weight values, and the corresponding convolution kernels includes four weight values at most. Therefore, the quantity of the multipliers may be 4 or more. Referring to the example of FIG. 5 again, four output feature maps (0, 0) - (1, 1) can be obtained through the convolution operation in step S140, where each feature map is a 3×3 matrix. It can be understood that although each optimized convolution kernel may have a different size, a corresponding feature map thereof is also optimized accordingly. Therefore, a convolutional output feature map corresponding to each optimized convolution kernel is the same as that before optimization, and all convolutional output feature maps have a same size.

In step S150, interleaving synthesis processing is performed on various convolutional output feature maps, to obtain an interleaving synthetic output. The interleaving synthesis processing may include adding all elements in each convolutional output into a synthetic matrix by taking the stride in the height direction and the stride in the width direction that are used for deconvolution operation as padding strides, and taking the two-dimensional indexes in the height direction and the width direction of the convolution kernel as a padding offset. The interleaving synthesis processing can be represented by the following formulas 9 and 10, where ih_{fo} and iw_{fo} respectively represent a height coordinate and a width coordinate in the synthetic matrix; isₕ and is_{w} represent two-dimensional indexes of the convolutional output feature map, that is, two-dimensional indexes of the corresponding convolution kernel; iₕ and i_{w} respectively represent a height coordinate and a width coordinate in the convolutional output feature map; and sₕ and s_{w} respectively represent padding strides in the height direction and the width direction. ${ih}_{fo} = {i}_{h} \times {s}_{h} + {is}_{h}$ (Formula 9) ${iw}_{fo} = {i}_{w} \times {s}_{w} + {is}_{w}$ (Formula 10)

A position coordinate in each convolutional output feature map may be converted into a position coordinate in the synthetic matrix according to formulas 9 and 10, so that data in each convolutional output feature map is padded into the synthetic matrix, thus completing the interleaving synthesis processing. For example, referring to the example shown in FIG. 5, each feature data in the convolutional output feature map (0, 0) is padded into the synthetic matrix according to that the height padding stride sₕ=2, the width padding stride s_{w}=2, and offsets in the height direction and the width direction are both zero.

As shown in FIG. 5, feature data "14, 6, and 8" at three positions (0, 0), (0, 1), and (0, 2) in the first row of the convolutional output feature map (0, 0) are respectively padded at positions (0, 0), (0, 2) and (0, 4) in the synthetic matrix that are calculated according to the foregoing formulas 9 and 10, and feature data "-4, 2, and 2" at three positions (2, 0), (2, 1), and (2, 2) in the third row are respectively padded at positions (4, 0), (4, 2) and (4, 4) in the synthetic matrix that are determined through calculations. Each feature data in the convolutional output feature map (0, 1) is also padded into the synthetic matrix based on that the height stride sₕ=2 and the width stride s_{w}=2. However, relative to the convolutional output feature map (0, 0), an offset in the height direction of the convolutional output feature map (0, 1) is zero, and an offset in the width direction is 1.

As shown in FIG. 5, feature data "-35, -15, and -20" at three positions (0, 0), (0, 1), and (0, 2) in the first row of the convolutional output feature map (0, 1) are respectively padded at positions (0, 1), (0, 3) and (0, 5) in the synthetic matrix that are calculated according to the foregoing formulas 9 and 10, and feature data "10, -5, and -5" at three positions (2, 0), (2, 1), and (2, 2) in the third row are respectively padded at positions (4, 1), (4, 3), and (4, 5) in the synthetic matrix that are determined through calculations. Each feature data in the convolutional output feature map (1, 0) is also padded into the synthetic matrix based on that the height stride sₕ=2 and the width stride s_{w}=2. However, relative to the convolutional output feature map (0, 0), an offset in the height direction of the convolutional output feature map (1, 0) is 1, and an offset in the width direction is 0.

As shown in FIG. 5, feature data "-21, -9, and -12" at three positions (0, 0), (0, 1), and (0, 2) in the first row of the convolutional output feature map (1, 0) are respectively padded at positions (1, 0), (1, 2) and (1, 4) in the synthetic matrix that are calculated according to the foregoing formulas 9 and 10, and feature data "6, -3, and -3" at three positions (2, 0), (2, 1), and (2, 2) in the third row are respectively padded at positions (5, 0), (5, 2) and (5, 4) in the synthetic matrix that are determined through calculations. Each feature data in the convolutional output feature map (1, 1) is padded into the synthetic matrix based on that the height stride sₕ=2, the width stride s_{w}=2, the offset in the height direction is 1, and the offset in the width direction is 1.

As shown in FIG. 5, feature data "13, 9, and -2" at three positions (0, 0), (0, 1), and (0, 2) in the first row of the convolutional output feature map (1, 1) are respectively padded at positions (1, 1), (1, 3) and (1, 5) in the synthetic matrix that are calculated according to the foregoing formulas 9 and 10, and feature data "-1, 2, and 1" at three positions (2, 0), (2, 1), and (2, 2) in the third row are respectively padded at positions (5, 1), (5, 3), and (5, 5) in the synthetic matrix that are determined through calculations. In this way, as shown in FIG. 5, four convolutional output feature maps represented by using 3×3 matrixes can be interleaved into an interleaving synthetic feature map with a 6×6 matrix.

The interleaving synthetic output obtained at step S150 includes at least a deconvolutional output corresponding to the initially provided deconvolution kernel and feature map. For example, in some embodiments, the interleaving synthetic output obtained at step S150 is the deconvolutional output of the initially provided deconvolution kernel and feature map. In some other embodiments, interleaving synthetic output may be tailored, to obtain the deconvolutional output. Therefore, the method 100 provided in this embodiment may also include step S160.

In step S160, the interleaving synthetic output is tailored, to obtain a deconvolutional output corresponding to the deconvolution kernel and the initially input feature map.

Specifically, in step S160, the right side and the lower side of the interleaving synthetic output may be tailored until a size after tailoring corresponds to a size of the deconvolutional output. For example, sizes hₒ and wₒ of the deconvolutional output may be calculated according to the following formulas 11 and 12. ${h}_{o} = \left(h-1\right) \times {s}_{h} - 2 \times {p}_{h} + {k}_{h} + {op}_{h}$ (Formula 11) ${w}_{o} = \left(w-1\right) \times {s}_{w} - 2 \times {p}_{w} + {k}_{w} + {op}_{w}$ (Formula 12)

Moreover, sizes h_{fo} and w_{fo} of the interleaving synthetic output may be calculated according to formulas 13 to 16, where h'ₒ and w'ₒ are sizes of the convolutional output of each optimized convolution kernel. ${h}_{fo} = {s}_{h} \times {h}_{o}^{′}$ (Formula 13) ${w}_{fo} = {s}_{w} \times {w}_{o}^{′}$ (Formula 14) ${h}_{o}^{′} = h + {p}_{ht}^{′} + {p}_{hb}^{′} - {k}_{h}^{′} + 1$ (Formula 15) ${w}_{o}^{′} = w + {p}_{wl}^{′} + {p}_{wr}^{′} - {k}_{w}^{′} + 1$ (Formula 16)

Therefore, in step S160, (w_{fo}-wₒ) columns may be tailored on the right side of the interleaving synthetic output, and (h_{fo}-hₒ) rows on the lower side may be tailored, so as to obtain a deconvolutional output with a size of (hₒ, wₒ).

In the example of FIG. 5, it is calculated according to the foregoing formulas that the size of the convolutional output is 3×3, the size of the interleaving synthetic output is 6×6, and the size of the deconvolutional output is 5×5. Therefore, in the tailoring step S160, a column of pixels on the right side and a row of pixels on the lower side of the interleaving synthetic output are removed, so as to obtain the deconvolutional output. It can be understood that in some embodiments, if it is calculated that the size of the interleaving synthetic output is equal to the size of the deconvolutional output, the tailoring step S160 can be omitted.

It can be understood from the foregoing descriptions that are made with reference to FIG. 4 and FIG. 5, by using the method in the foregoing embodiments, deconvolution processing can be performed on the feature map by using convolution hardware without dedicated deconvolution hardware. Therefore, hardware complexity can be reduced, and chip area overhead and power consumption overhead can be saved.

Moreover, according to this method, there is no need to perform sparse processing on the feature map, and a large quantity of zero-valued invalid weights are removed through optimization. Hence, invalid operations can be greatly reduced, thereby improving operating efficiency of the hardware, improving delay and energy consumption characteristics of the related hardware, and reducing requirements for on-chip cache space, which help further reduce hardware costs.

### Exemplary apparatus

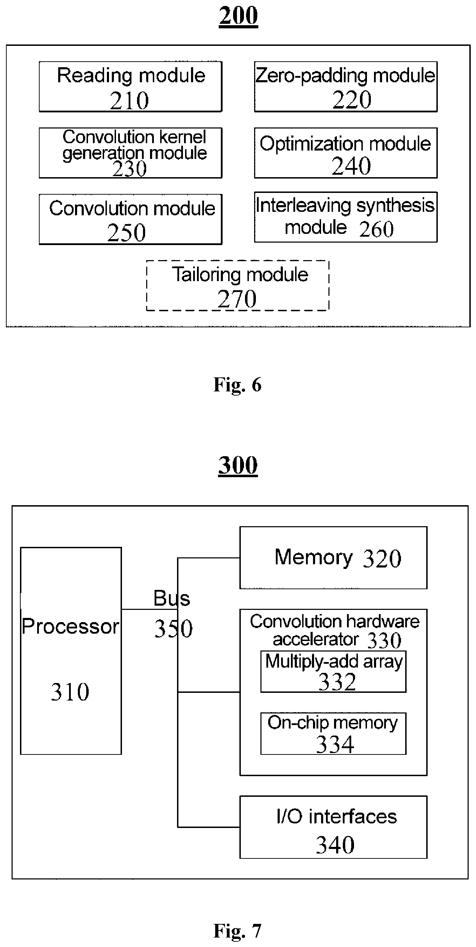

FIG. 6 shows a functional block diagram of an apparatus 200 for performing deconvolution processing on a feature map according to an exemplary embodiment. It can be understood that each functional module in the apparatus 200 may be configured to implement each step in the foregoing method 100 described with reference to FIG. 4 and FIG. 5. Therefore, various modules are merely briefly described below, and for specific details, reference may be made to the method 100 described above.

As shown in FIG. 6, the apparatus 200 can include a reading module 210, a zero-padding module 220, a convolution kernel generation module 230, an optimization module 240, a convolution module 250, and an interleaving synthesis module 260.

The reading module 210 may be configured to read a feature map and a deconvolution kernel into an on-chip memory, such as a static random access memory SRAM, of convolution hardware, as described in step S110. The convolution hardware may be a hardware accelerator dedicated for performing convolution processing, and may include a multiply-add array composed of multipliers and adders and the on-chip memory. The feature map and the deconvolution kernel can be read into the on-chip memory of the convolution hardware from, for example, a dynamic random access memory DRAM that serves as a memory, or from a non-volatile memory such as a flash memory or an electrically erasable programmable read-only memory EEPROM.

The zero-padding module 220 may be configured to perform zero-padding processing on the feature map, as described in step S110. In some embodiments, as described above, zero-padding processing may be performed on the feature map in various flexible manners. For example, zero padding is performed on the feature map while the feature map is read into the on-chip memory, or zero padding is performed on the feature map after the feature map is read into the on-chip memory, or zero padding is performed on the feature map when the feature map is read from the on-chip memory for use in, for example, convolution operations or other processing.

The convolution kernel generation module 230 may be configured to generate a plurality of convolution kernels based on the deconvolution kernel, as described in step S120. For example, the convolution kernel generation module 230 may determine a quantity and sizes of convolution kernels corresponding to the deconvolution kernel, so as to determine a weight value of each position in each convolution kernel.

Specifically, for each position in each convolution kernel, the convolution kernel generation module 230 may determine two-dimensional coordinate values of a corresponding position in the deconvolution kernel based on two-dimensional indexes in a height direction and a width direction of the convolution kernel, a height size and a width size of the convolution kernel, two-dimensional coordinate values of the position, and a stride in the height direction, a stride in the width direction, a zero-padding parameter in the height direction, and a zero-padding parameter in the width direction that are used for deconvolution operation; and take a weight value of the corresponding position as a weight value of the position in the convolution kernel. When the determined position coordinate of the corresponding position in the deconvolution kernel exceeds a range of a position coordinate in the deconvolution kernel, the convolution kernel generation module 230 may insert a zero value at this position in the convolution kernel. In other words, a weight at this position is a zero-valued invalid weight.

In some embodiments, to distinguish between an inserted zero-valued invalid weight and a zero-valued valid weight initially included in the deconvolution kernel, the convolution kernel generation module 230 may further attach a mark to the inserted zero-value invalid weight to indicate that it is an invalid weight.

The optimization module 240 may be configured to remove a row and/or column of each convolution kernel in which all elements are invalid weights to obtain an optimized convolution kernel, and remove a corresponding row and/or column in the zero-padded feature map to obtain an optimized feature map corresponding to each optimized convolution kernel, as described in detail in step S130. It can be learned that, optimized feature maps determined for various optimized convolution kernels by the optimization module 240 may be different from each other.

The convolution module 250 may perform convolution operation on each optimized convolution kernel and the corresponding optimized feature map by using the multiply-add array of the convolution hardware, to obtain various corresponding convolutional outputs, as described in step S140. For example, the convolution module 250 may provide, in a sliding window manner, each weight value in the convolution kernel and feature data in the corresponding feature map to a multiplier. Multiplication is completed in the multiplier, and then a result is output to the adder and is accumulated with outputs of other multipliers. An obtained sum can be stored in the on-chip memory SRAM.

The interleaving synthesis module 260 may perform interleaving synthetic processing on a plurality of convolutional output feature maps generated by the convolution module 250, to obtain an interleaving synthetic output, as described in step S150.

For example, the interleaving synthesis module 260 may be configured to pad all elements in each convolutional output into a synthetic matrix by taking the stride in the height direction and the stride in the width direction that are used for deconvolution operation as padding strides, and take the two-dimensional indexes in the height direction and the width direction of the convolution kernel as padding offsets. The interleaving synthetic output generated thereby may include at least a deconvolutional output corresponding to the initially provided deconvolution kernel and feature map.

For another example, in some embodiments, the interleaving synthetic output obtained by the interleaving synthesis module 260 is the deconvolutional output of the initially provided deconvolution kernel and feature map.

In some embodiments, optionally, the apparatus 200 may further include a tailoring module 270 that may tailor the interleaving synthetic output feature maps generated by the interleaving synthesis module 260, to obtain the deconvolutional output, as described in step S160. Specifically, the tailoring module 270 may tailor the right side and the lower side of the interleaving synthetic output, until a size after tailoring corresponds to a size of the deconvolutional output.

### Exemplary electronic device

FIG. 7 shows a structural block diagram of an electronic device 300 according to an exemplary embodiment. The electronic device 300 may be configured to implement the foregoing method for performing deconvolution processing through convolution operations that are described above with reference to FIG. 4 to FIG. 6.

As shown in FIG. 7, the electronic device 300 may include one or more processors 310, one or more memories 320, a convolution hardware accelerator 330, and one or more input/output (I/O) interfaces 340, which are connected to each other through a bus system 350.

The processor 310 may be any form of processing unit having a data processing capability and/or an instruction execution capability. Examples of the processor 310 include but not limited to a central processing unit (CPU), an ARM processor, a microcontroller unit (MCU), a general-purpose processor, a controller, a digital signal process (DSP), an application-specific integrated circuit (ASIC), a field-programmable gate array (FPGA) or another programmable logic device, a transistor logic device, a hardware component, or any combination thereof. The processor 310 can run instructions in the memory 320 associated with the processor 310 and/or exchange data with the memory 320, so as to control other components coupled through the bus system 350 to cooperate to implement the method, steps, or functions described above.

The memory 320 may include various forms of computer-readable/writable storage media, such as a volatile memory and/or a non-volatile memory. The volatile memory may include, for example, a dynamic random access memory (DRAM) and/or a cache. The non-volatile memory may include, for example, an electrically erasable programmable read-only memory (EEPROM), a hard disk, and a flash memory. The readable/writable storage medium may include, for example, but is not limited to electricity, magnetism, light, electromagnetism, infrared ray, or a semiconductor system, apparatus or device, or any combination of the above.

In addition, computer-executable instructions can be stored in the memory 320. The instructions can be run by the processor 310 to control other components coupled through the bus system 350 to cooperate to implement the method, steps, or functions described above.

The convolution hardware accelerator 330, which may also be referred to as a convolutional neural network hardware accelerator or dedicated convolution hardware, may be dedicated hardware designed to perform convolution-related processing. As shown in FIG. 7, the convolution hardware accelerator 330 may include a multiply-add array 332 and an on-chip memory 334. It can be understood that, with respect to the on-chip memory 334, the memory 320 described above may also be referred to as an off-chip memory. The multiply-add array 332 may include an array composed of a plurality of multipliers and a plurality of adders, and is configured to perform convolution processing on the feature map and the convolution kernel. The on-chip memory 334 may include, for example, a static random access memory SRAM, and is configured to buffer data that is to be provided to the multiply-add array 332 for convolution processing and data generated by the multiply-add array 332.

The I/O interface 340 may include communication interfaces connected to various input and output devices, such as a camera interface, a radar interface, a touch display interface, a network interface, and a controller interface that supports specific communication protocols. It should be understood that various I/O interfaces 340 may be provided according to actual application requirements.

The bus system 350 may be any bus system that can connect various components in the electronic device 300 and support the various components to communicate with each other. Examples of the bus system 350 include but are not limited to a CAN (area network controller) bus, an ISA (industry standard architecture) bus, a PIC (peripheral interconnection) or PCI-E (express peripheral interconnection) bus, an I2C (inter-integrated circuit) bus, an SPI (serial peripheral interface) bus, and an UART (universal asynchronous serial port) bus.

Certainly, for simplicity, FIG. 7 shows only some of the components in the electronic device 300 that are relevant to the present disclosure, while a lot of other components are omitted. It should be noted that the components and the structure of the electronic device 300 shown in FIG. 7 are only exemplary and are not restrictive. The electronic device 300 may also have other components and structures as required.

FIG. 8 shows a structural block diagram of a convolution hardware accelerator 400 according to an exemplary embodiment. The convolution hardware accelerator 400 shown in FIG. 8 can be used as, for example, the convolution hardware accelerator 330 in the electronic device 300 of FIG. 7. As shown in FIG. 8, the convolution hardware accelerator 400 may include: an interface unit 410, a feature map buffer unit 420, a convolution kernel buffer unit 430, a multiplier array 440, an addition tree unit 450, an offset unit 460, and an output buffer unit 470. The feature map buffer unit 420, the convolution kernel buffer unit 430, and the output buffer unit 470 may be collectively referred to as an on-chip buffer, and the multiplier array 440 and the addition tree unit 450 may be collectively referred to as a multiply-add array.

Referring to FIG. 8, the interface unit 410 may include various interfaces that are communicatively connected to the outside, to receive data input from the outside, such as feature map data and convolution kernel data; and to provide output data, such as output data obtained after convolution operation is performed on the feature map, to the outside. In some embodiments, the interface unit 410 can be implemented as a network-on-chip (NoC), which has advantages of good scalability, low power consumption, and high communication efficiency and reliability, and is very suitable for use in a neural network accelerator. Certainly, the interface unit 410 may also include other interfaces suitable for being communicatively connected to the bus system 350 shown in FIG. 7.

The feature map cache unit 420 may receive and store the feature map data by using the interface unit 410. Herein, the feature map may be an initial input feature map that is collected by a camera and is performed with preprocessing such as tailoring and sampling; or may be a feature map output by an upper layer in the neural network, which may generally be represented in a form of a matrix.

The convolution kernel buffer unit 430 may receive and store convolution kernel data or deconvolution kernel data by using the interface unit 410. For example, the convolution hardware accelerator 400 may receive the convolution kernel to perform conventional convolution processing, or may receive the deconvolution kernel and perform deconvolution processing through a convolution operation according to the method described above with reference to FIG. 4 to FIG. 6. In this method, the deconvolution kernel may be split into a plurality of convolution kernels, as described in detail with reference to step S120 shown in FIG. 4. The convolution kernel and the deconvolution kernel may include one or more weight values, which may generally be represented as a two-dimensional matrix, and may optionally include a bias value that is used for linearly adjusting an output value of the convolution operation.

It can be understood that the feature map buffer unit 420, the convolution kernel buffer unit 430, and the output buffer unit 470 described below may be separate buffer devices, or may be different storage areas in a same buffer device. For example, the feature map buffer unit 420, the convolution kernel buffer unit 430, and the output buffer unit 470 may be implemented as a static random access memory SRAM, which may have a predetermined bit width.

The multiplier array 440 may include a plurality of multipliers 441. Each multiplier 441 may receive a piece of feature data from the feature map buffer unit 420, receive a weight value in the convolution kernel from the convolution kernel buffer unit 430, multiply the feature data and the weight value, and output a product of the feature data and the weight value.

The addition tree unit 450 may include a plurality of adders 451 that are arranged in a tree structure. The addition tree unit 450 may receive an output value of each multiplier 441 from the multiplier array 440, and accumulate output values to obtain and output a sum value thereof.

The bias unit 460 may receive a bias value from the convolution kernel buffer unit 430, receive the output value from the addition tree unit 450, and linearly adjust the output value of the addition tree unit 450 by using the offset value and then output an adjusted value. The value output by the bias unit 460 may be stored in the output buffer unit 470 as a convolution-operation output value. The foregoing steps may be repeated in a sliding window manner, so as to obtain a convolutional operation result, that is, an output feature map, of the entire input feature map and the corresponding convolution kernel. The convolution operation result may be stored in the buffer unit 470 for subsequent processing.

It can be understood that, for simplicity, FIG. 8 shows only some of the components of the convolution hardware accelerator 400 that are closely related to the present disclosure, while a lot of other components are omitted. For example, the convolution hardware accelerator 400 may also include a convolution control unit for controlling the convolution operation, a data control unit for carrying data, and the like. Functions and principles of these units are also known in the art, and details are not described herein again. It should also be understood that the components and the structure of the convolution hardware accelerator 400 shown in FIG. 8 are only exemplary and are not restrictive. According to the method steps described above, the convolution hardware accelerator 400 may also have other components and structures.

Although the method for performing deconvolution processing through convolution operations has been described above with reference to a dedicated accelerator, it should be understood that the principle of the present disclosure may also be implemented by using general-purpose hardware such as a CPU or a GPU, and similar technical effects may be implemented. For example, chip area overhead and power consumption overhead can be saved by avoiding sparse processing, and a large quantity of invalid operations are reduced through optimization, thereby further improving operating efficiency of the hardware, improving delay and energy consumption characteristics, and reducing requirements for on-chip cache space of the general-purpose processor, which help reduce hardware costs.

### Exemplary computer program product and computer readable storage medium

In addition to the foregoing method and device, the embodiments of the present disclosure may further relate to a computer program product, which includes a computer program instruction. When the computer program instruction is run by a processor, a convolutional neural network accelerator can be controlled to implement the method for performing deconvolution processing on a feature map according to the embodiments of the present disclosure that is described in the "exemplary method" part of this specification.

The computer program product may be program codes, written with one or any combination of a plurality of programming languages, that are configured to perform the operations in the embodiments of the present disclosure. The programming languages include an object-oriented programming language such as Java, C++, or phyon, and further include a conventional procedural programming language such as a "C" language or a similar programming language. The program codes may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, which stores computer program instructions. When the computer program instructions are run by a processor, the processor is enabled to perform the method for performing deconvolution processing according to the embodiments of the present disclosure that is described in the "exemplary method" part of this specification.

The computer readable storage medium may be one readable medium or any combination of a plurality of readable media. The readable medium may be a readable signal medium or a readable storage medium. The readable storage medium can include, for example, but is not limited to electricity, magnetism, light, electromagnetism, infrared ray, or a semiconductor system, apparatus or device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or flash memory) or a flash memory, an optical fiber, a portable compact disk read-only memory (CD-ROM), an optical storage device, a magnetic storage device, or any suitable combination of the above.

Basic principles of the present disclosure are described above in combination with the specific embodiments. However, it should be pointed out that the advantages, superiorities, and effects mentioned in the present disclosure are merely examples but are not for limitation, and it cannot be considered that these advantages, superiorities, and effects are necessary for each embodiment of the present disclosure. In addition, specific details of the above disclosure are merely for examples and for ease of understanding, rather than limitations. The foregoing details do not limit that the present disclosure must be implemented by using the foregoing specific details. Rather, a person skilled in the art can easily conceive of many changes in form and detail under the teachings of the present disclosure, and these changes should all fall within the scope defined by the claims of the present disclosure.

The block diagrams of the equipment, the apparatus, the device, and the system involved in the present disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and may be used interchangeably with "including but not limited to". The terms "or" and "and" used herein refer to the term "and/or", and may be used interchangeably with "and/or', unless the context clearly indicates otherwise. The term "such as" used herein refers to the phrase "such as but not limited to", and may be used interchangeably with "such as but not limited to".

## Claims

1. A method for performing deconvolution processing on a feature map by using dedicated convolution hardware, the dedicated convolution hardware comprising a multiply-add array and an on-chip memory, the method comprising:
reading the feature map and a deconvolution kernel into the on-chip memory, and performing zero-padding processing on the feature map (S110);
performing convolution processing on each optimized convolution kernel and the corresponding optimized feature map by using the multiply-add array, to obtain a plurality of convolutional outputs (S140); and
performing interleaving synthesis processing on the plurality of convolutional outputs, to obtain an interleaving synthetic output (S150),
**characterized in that** the method further comprises: determining a plurality of convolution kernels based on the deconvolution kernel (S120);
removing a row and/or column of each convolution kernel in which all elements are zero-valued invalid weights to obtain an optimized convolution kernel, and removing a corresponding row and/or column in a zero-padded feature map to obtain an optimized feature map corresponding to each optimized convolution kernel (S130);
wherein the determining a plurality of convolution kernels based on the deconvolution kernel (S120) comprises:
determining a quantity and sizes of convolution kernels corresponding to the deconvolution kernel, wherein the quantity of the convolution kernels is equal to a product of a stride in a height direction and a stride in a width direction that are used for deconvolution operation, a height size of the convolution kernel is a function of a height size of the deconvolution kernel and the stride in the height direction and a zero-padding parameter in the height direction that are used for deconvolution operation, and a width size of the convolution kernel is a function of a width size of the deconvolution kernel and the stride in the width direction and a zero-padding parameter in the width direction that are used for deconvolution operation; and
for each position in each convolution kernel, determining two-dimensional coordinate values of a corresponding position in the deconvolution kernel based on two-dimensional indexes in the height direction and the width direction of the convolution kernel, the height size and the width size of the convolution kernel, two-dimensional coordinate values of the position, and the stride in the height direction, the stride in the width direction, the zero-padding parameter in the height direction, and the zero-padding parameter in the width direction that are used for deconvolution operation, and taking a weight value of the corresponding position as a weight value of the position in the convolution kernel,
wherein when the determined two-dimensional coordinate values of the corresponding position in the deconvolution kernel exceed a range of a position coordinate in the deconvolution kernel, a weight in the position of the convolution kernel is determined as a zero-valued invalid weight.

2. The method according to claim 1, wherein a quantity of multipliers comprised in the multiply-add array is larger than or equal to a quantity of weight values comprised in each optimized convolution kernel.

3. The method according to claim 1, wherein the performing zero-padding processing on the feature map comprises:
determining an upper-side quantity for zero padding and a lower-side quantity for zero padding of the feature map based on a height size of the deconvolution kernel and a stride in a height direction and a zero-padding parameter in the height direction that are used for deconvolution operation, wherein the lower-side quantity for zero padding is one more row than the upper-side quantity for zero padding; and
determining a left-side quantity for zero padding and a right-side quantity for zero padding of the feature map based on a width size of the deconvolution kernel and a stride in a width direction and a zero-padding parameter in the width direction that are used for deconvolution operation, wherein the right-side quantity for zero padding is one more column than the left-side quantity for zero padding.

4. The method according to claim 1, wherein the performing interleaving synthesis processing on the plurality of convolutional outputs comprises:
padding all elements in each convolutional output into a synthetic matrix by taking the stride in the height direction and the stride in the width direction that are used for deconvolution operation as padding strides, and taking the two-dimensional indexes in the height direction and the width direction of the convolution kernel as padding offsets.

5. The method according to claim 1, wherein after the performing interleaving synthesis processing on the plurality of convolutional outputs, to obtain an interleaving synthetic output, the method further comprises:
tailoring the interleaving synthetic output, to obtain the deconvolutional output corresponding to the feature map and the deconvolution kernel (S160).

6. The method according to claim 5, wherein the tailoring the interleaving synthetic output comprises:
tailoring right and lower sides of the interleaving synthetic output, until a size of the interleaving synthetic output after tailoring corresponds to a size of the deconvolutional output corresponding to the feature map and the deconvolution kernel.

7. An apparatus (200) for performing deconvolution processing on a feature map by using dedicated convolution hardware, the dedicated convolution hardware comprising a multiply-add array and an on-chip memory, the apparatus comprising:
a reading module (210), configured to read the feature map and a deconvolution kernel into the on-chip memory;
a zero-padding module (220), configured to perform zero-padding processing on the feature map;
a convolution module (250), configured to perform convolution processing on each optimized convolution kernel and the corresponding optimized feature map by using the multiply-add array, to obtain a plurality of convolutional outputs; and
an interleaving synthesis module (260), configured to perform interleaving synthesis processing on the plurality of convolutional outputs, to obtain an interleaving synthetic output,
**characterized in that** the apparatus further comprises a convolution kernel generation module (230), configured to generate a plurality of convolution kernels based on the deconvolution kernel; and
an optimization module (240), configured to remove a row and/or column of each convolution kernel in which all elements are zero-valued
invalid weights to obtain an optimized convolution kernel, and remove a corresponding row and/or column in a zero-padded feature map to obtain an optimized feature map corresponding to each optimized convolution kernel,
wherein the convolution kernel generation module (230) is configured to
determine a quantity and sizes of convolution kernels corresponding to the deconvolution kernel, wherein the quantity of the convolution kernels is equal to a product of a stride in a height direction and a stride in a width direction that are used for deconvolution operation, a height size of the convolution kernel is a function of a height size of the deconvolution kernel and the stride in the height direction and a zero-padding parameter in the height direction that are used for deconvolution operation, and a width size of the convolution kernel is a function of a width size of the deconvolution kernel and the stride in the width direction and a zero-padding parameter in the width direction that are used for deconvolution operation; and
for each position in each convolution kernel, determine two-dimensional coordinate values of a corresponding position in the deconvolution kernel based on two-dimensional indexes in the height direction and the width direction of the convolution kernel, the height size and the width size of the convolution kernel, two-dimensional coordinate values of the position, and the stride in the height direction, the stride in the width direction, the zero-padding parameter in the height direction, and the zero-padding parameter in the width direction that are used for deconvolution operation, and taking a weight value of the corresponding position as a weight value of the position in the convolution kernel,
wherein when the determined two-dimensional coordinate values of the corresponding position in the deconvolution kernel exceeds a range of a position coordinate in the deconvolution kernel, a weight in the position of the convolution kernel is determined as a zero-valued invalid weight.

8. The apparatus according to claim 7, wherein a quantity of multipliers comprised in the multiply-add array is larger than or equal to a quantity of weight values comprised in each optimized convolution kernel.

9. The apparatus according to claim 7, wherein the zero-padding module is configured to:
determine an upper-side quantity for zero padding and a lower-side quantity for zero padding of the feature map based on a height size of the deconvolution kernel and a stride in a height direction and a zero-padding parameter in the height direction that are used for deconvolution operation, wherein the lower-side quantity for zero padding is one more row than the upper-side quantity for zero padding; and
determine a left-side quantity for zero padding and a right-side quantity for zero padding of the feature map based on a width size of the deconvolution kernel and a stride in a width direction and a zero-padding parameter in the width direction that are used for deconvolution operation, wherein the right-side quantity for zero padding is one more column than the left-side quantity for zero padding.

10. The apparatus according to claim 7, wherein the interleaving synthesis module is configured to
pad all elements in each convolutional output into a synthetic matrix by taking the stride in the height direction and the stride in the width direction that are used for deconvolution operation as padding strides, and
take the two-dimensional indexes in the height direction and the width direction of the convolution kernel as padding offsets.

11. The apparatus according to claim 7, wherein the apparatus further comprises a tailoring module configured to tailor the interleaving synthetic output, to obtain the deconvolutional output corresponding to the feature map and the deconvolution kernel.

12. A computer readable storage medium, storing computer program instructions, **characterized in that**
when the computer program instructions are run by an electronic device, the electronic device causes the electronic device to perform the method according to any one of claims 1 to 6; and
the electronic device further comprises dedicated convolution hardware, the dedicated convolution hardware comprising a multiply-add array and an on-chip memory.

## Patentansprüche

1. Verfahren zur Durchführung einer Dekonvolutionsverarbeitung an einer Merkmalskarte unter Verwendung von dedizierter Faltungshardware, wobei die dedizierte Faltungshardware ein Multiply-Add-Array und einen On-Chip-Speicher umfasst, wobei das Verfahren Folgendes umfasst:
Einlesen der Merkmalskarte und eines Dekonvolutionskerns in den On-Chip-Speicher, und
Durchführen einer Nullauffüllverarbeitung an der Merkmalskarte (S110); Durchführen einer Faltungsverarbeitung an jedem optimierten Faltungskern und der entsprechenden optimierten Merkmalskarte unter Verwendung des Multiply-Add-Arrays, um eine Vielzahl von Faltungsausgaben zu erhalten (S140); und
Durchführen einer Verschachtelungssyntheseverarbeitung an der Vielzahl von Faltungsausgaben, um eine Verschachtelungssyntheseausgabe zu erhalten (S150),
**gekennzeichnet dadurch, dass** das Verfahren weiter Folgendes umfasst: Bestimmen einer Vielzahl von Faltungskernen, basierend auf dem Dekonvolutionskern (S120);
Entfernen einer Zeile und/oder Spalte jedes Faltungskerns, in der alle Elemente ungültige Gewichte mit dem Wert Null sind, um einen optimierten Faltungskern zu erhalten, und Entfernen einer entsprechenden Zeile und/oder Spalte in einer nullaufgefüllten Merkmalskarte, um eine jedem optimierten Faltungskern entsprechende optimierte Merkmalskarte zu erhalten (S130);
wobei das Bestimmen einer Vielzahl von Faltungskernen, basierend auf dem Dekonvolutionskern (S120), Folgendes umfasst:
Bestimmen einer Anzahl und Abmessungen von Faltungskernen, die dem Dekonvolutionskern entsprechen, wobei die Anzahl der Faltungskerne gleich einem Produkt einer Schrittweite in einer Höhenrichtung und einer Schrittweite in einer Breitenrichtung ist, die für
eine Dekonvolutionsoperation verwendet werden, eine Höhenabmessung des Faltungskerns eine Funktion von einer Höhenabmessung des Dekonvolutionskerns und der Schrittweite in der Höhenrichtung und einem Nullauffüllparameter in der Höhenrichtung ist, die für die Dekonvolutionsoperation verwendet werden, und eine Breitenabmessung des Faltungskerns eine Funktion von einer Breitenabmessung des Dekonvolutionskerns und der Schrittweite in der Breitenrichtung und einem Nullauffüllparameter in der Breitenrichtung ist, die für die Dekonvolutionsoperation verwendet werden; und
für jede Position in jedem Faltungskern Bestimmen zweidimensionaler Koordinatenwerte einer entsprechenden Position in dem Dekonvolutionskern, basierend auf zweidimensionalen Indizes in der Höhenrichtung und der Breitenrichtung des Faltungskerns, der Höhenabmessung und der Breitenabmessung des Faltungskerns, zweidimensionalen Koordinatenwerten der Position und der Schrittweite in der Höhenrichtung, der Schrittweite in der Breitenrichtung, dem Nullauffüllparameter in der Höhenrichtung und dem Nullauffüllparameter in der Breitenrichtung, die für die Dekonvolutionsoperation verwendet werden, und Nehmen eines Gewichtswerts der entsprechenden Position als Gewichtswert der Position in dem Faltungskern,
wobei, wenn die bestimmten zweidimensionalen Koordinatenwerte der entsprechenden Position in dem Dekonvolutionskern einen Bereich einer Positionskoordinate in dem Dekonvolutionskern überschreiten, ein Gewicht an der Position des Faltungskerns als ein ungültiges Gewicht mit dem Wert Null bestimmt wird.

2. Verfahren nach Anspruch 1, wobei eine Anzahl von Multiplizierern, die in dem Multiply-Add-Array umfasst sind, größer als oder gleich einer Anzahl von Gewichtswerten ist, die in jedem optimierten Faltungskern umfasst sind.

3. Verfahren nach Anspruch 1, wobei das Durchführen der Nullauffüllverarbeitung an der Merkmalskarte Folgendes umfasst:
Bestimmen einer oberseitigen Anzahl für die Nullauffüllung und einer unterseitigen Anzahl für die Nullauffüllung der Merkmalskarte, basierend auf einer Höhenabmessung des Dekonvolutionskerns und einer Schrittweite in einer Höhenrichtung und einem Nullauffüllparameter in der Höhenrichtung, die für die Dekonvolutionsoperation verwendet werden, wobei die unterseitige Anzahl für die Nullauffüllung eine Zeile mehr als die oberseitige Anzahl für die Nullauffüllung ist; und
Bestimmen einer linksseitigen Anzahl für die Nullauffüllung und einer rechtsseitigen Anzahl für die Nullauffüllung der Merkmalskarte, basierend auf einer Breitenabmessung des Dekonvolutionskerns und einer Schrittweite in einer Breitenrichtung und einem Nullauffüllparameter in der Breitenrichtung, die für die Dekonvolutionsoperation verwendet werden, wobei die rechtsseitige Anzahl für die Nullauffüllung eine Spalte mehr als die linksseitige Anzahl für die Nullauffüllung ist.

4. Verfahren nach Anspruch 1, wobei das Durchführen der Verschachtelungssyntheseverarbeitung an der Vielzahl von Faltungsausgaben Folgendes umfasst:
Auffüllen aller Elemente in jeder Faltungsausgabe in eine Synthesematrix, indem die Schrittweite in der Höhenrichtung und die Schrittweite in der Breitenrichtung, die für die Dekonvolutionsoperation verwendet werden, als Auffüllschrittweiten genommen werden, und indem die zweidimensionalen Indizes in der Höhenrichtung und der Breitenrichtung des Faltungskerns als Auffüllversätze genommen werden.

5. Verfahren nach Anspruch 1, wobei nach dem Durchführen der Verschachtelungssyntheseverarbeitung an der Vielzahl von Faltungsausgaben, um eine Verschachtelungssyntheseausgabe zu erhalten, das Verfahren weiter Folgendes umfasst:
Beschneiden der Verschachtelungssyntheseausgabe, um die der Merkmalskarte und dem Dekonvolutionskern entsprechende Dekonvolutionsausgabe zu erhalten (S160).

6. Verfahren nach Anspruch 5, wobei das Beschneiden der Verschachtelungssyntheseausgabe Folgendes umfasst:
Beschneiden von rechten und unteren Seiten der Verschachtelungssyntheseausgabe, bis eine Größe der Verschachtelungssyntheseausgabe nach dem Beschneiden einer Größe der der Merkmalskarte und dem Dekonvolutionskern entsprechenden Dekonvolutionsausgabe entspricht.

7. Einrichtung (200) zur Durchführung einer Dekonvolutionsverarbeitung an einer Merkmalskarte unter Verwendung von dedizierter Faltungshardware, wobei die dedizierte Faltungshardware ein Multiply-Add-Array und einen On-Chip-Speicher umfasst, wobei die Einrichtung Folgendes umfasst:
ein Lesemodul (210), das ausgebildet ist, die Merkmalskarte und einen Dekonvolutionskern in den On-Chip-Speicher einzulesen;
ein Nullauffüllmodul (220), das ausgebildet ist, eine Nullauffüllverarbeitung an der Merkmalskarte durchzuführen;
ein Faltungsmodul (250), das ausgebildet ist, eine Faltungsverarbeitung an jedem optimierten Faltungskern und der entsprechenden optimierten Merkmalskarte unter Verwendung des Multiply-Add-Arrays durchzuführen, um eine Vielzahl von Faltungsausgaben zu erhalten; und
ein Verschachtelungssynthesemodul (260), das ausgebildet ist, eine Verschachtelungssyntheseverarbeitung an der Vielzahl von Faltungsausgaben durchzuführen, um eine Verschachtelungssyntheseausgabe zu erhalten,
**dadurch gekennzeichnet, dass** die Einrichtung weiter ein Faltungskernerzeugungsmodul (230) umfasst, das ausgebildet ist, eine Vielzahl von Faltungskernen, basierend auf dem Dekonvolutionskern, zu erzeugen; und
ein Optimierungsmodul (240), das ausgebildet ist, eine Zeile und/oder Spalte jedes Faltungskerns zu entfernen, in der alle Elemente ungültige Gewichte mit dem Wert Null sind
um einen optimierten Faltungskern zu erhalten, und eine entsprechende Zeile und/oder Spalte in einer nullaufgefüllten Merkmalskarte zu entfernen, um eine jedem optimierten Faltungskern entsprechende optimierte Merkmalskarte zu erhalten,
wobei das Faltungskernerzeugungsmodul (230) ausgebildet ist, eine Anzahl und Abmessungen von Faltungskernen zu bestimmen, die dem Dekonvolutionskern entsprechen, wobei die Anzahl der Faltungskerne gleich einem Produkt einer Schrittweite in einer Höhenrichtung und einer Schrittweite in einer Breitenrichtung ist, die für die Dekonvolutionsoperation verwendet werden, eine Höhenabmessung des Faltungskerns eine Funktion von einer Höhenabmessung des Dekonvolutionskerns und der Schrittweite in der Höhenrichtung und einem Nullauffüllparameter in der Höhenrichtung ist, die für die Dekonvolutionsoperation verwendet werden, und eine Breitenabmessung des Faltungskerns eine Funktion von einer Breitenabmessung des Dekonvolutionskerns und der Schrittweite in der Breitenrichtung und einem Nullauffüllparameter in der Breitenrichtung ist, die für die Dekonvolutionsoperation verwendet werden; und
für jede Position in jedem Faltungskern zweidimensionale Koordinatenwerte einer entsprechenden Position in dem Dekonvolutionskern, basierend auf zweidimensionalen Indizes in der Höhenrichtung und der Breitenrichtung des Faltungskerns, der Höhenabmessung und der Breitenabmessung des Faltungskerns, zweidimensionalen Koordinatenwerten der Position und der Schrittweite in der Höhenrichtung, der Schrittweite in der Breitenrichtung, dem Nullauffüllparameter in der Höhenrichtung und dem Nullauffüllparameter in der Breitenrichtung, die für die Dekonvolutionsoperation verwendet werden, zu bestimmen, und einen Gewichtswert der entsprechenden Position als Gewichtswert der Position in dem Faltungskern zu nehmen,
wobei, wenn die bestimmten zweidimensionalen Koordinatenwerte der entsprechenden Position in dem Dekonvolutionskern einen Bereich einer Positionskoordinate in dem Dekonvolutionskern überschreiten, ein Gewicht an der Position des Faltungskerns als ein ungültiges Gewicht mit dem Wert Null bestimmt wird.

8. Einrichtung nach Anspruch 7, wobei eine Anzahl von Multiplizierern, die in dem Multiply-Add-Array umfasst sind, größer als oder gleich einer Anzahl von Gewichtswerten ist, die in jedem optimierten Faltungskern umfasst sind.

9. Einrichtung nach Anspruch 7, wobei das Nullauffüllmodul dazu ausgebildet ist,
eine oberseitige Anzahl für die Nullauffüllung und eine unterseitige Anzahl für die Nullauffüllung der Merkmalskarte, basierend auf einer Höhenabmessung des Dekonvolutionskerns und einer Schrittweite in einer Höhenrichtung und einem Nullauffüllparameter in der Höhenrichtung, die für die Dekonvolutionsoperation verwendet werden, zu bestimmen, wobei die unterseitige Anzahl für die Nullauffüllung eine Zeile mehr als die oberseitige Anzahl für die Nullauffüllung ist; und
eine linksseitige Anzahl für die Nullauffüllung und eine rechtsseitige Anzahl für die Nullauffüllung der Merkmalskarte, basierend auf einer Breitenabmessung des Dekonvolutionskerns und einer Schrittweite in einer Breitenrichtung und einem Nullauffüllparameter in der Breitenrichtung, zu bestimmen, die für die Dekonvolutionsoperation verwendet werden, wobei die rechtsseitige Anzahl für die Nullauffüllung eine Spalte mehr als die linksseitige Anzahl für die Nullauffüllung ist.

10. Einrichtung nach Anspruch 7, wobei das Verschachtelungssynthesemodul ausgebildet ist,
alle Elemente in jeder Faltungsausgabe in eine Synthesematrix aufzufüllen, indem die Schrittweite in der Höhenrichtung und die Schrittweite in der Breitenrichtung, die für die Dekonvolutionsoperation verwendet werden, als Auffüllschrittweiten genommen werden, und
die zweidimensionalen Indizes in der Höhenrichtung und der Breitenrichtung des Faltungskerns als Auffüllversätze zu nehmen.

11. Einrichtung nach Anspruch 7, wobei die Einrichtung weiter ein Beschneidungsmodul umfasst, das ausgebildet ist, die Verschachtelungssyntheseausgabe zu beschneiden, um die der Merkmalskarte und dem Dekonvolutionskern entsprechende Dekonvolutionsausgabe zu erhalten.

12. Computerlesbares Speichermedium, das Computerprogrammanweisungen speichert, **dadurch gekennzeichnet, dass**, wenn die Computerprogrammanweisungen von einer elektronischen Vorrichtung ausgeführt werden, die elektronische Vorrichtung die elektronische Vorrichtung veranlasst, das Verfahren nach einem der Ansprüche 1 bis 6 durchzuführen; und die elektronische Vorrichtung weiter dedizierte Faltungshardware umfasst, wobei die dedizierte Faltungshardware ein Multiply-Add-Array und einen On-Chip-Speicher umfasst.

## Revendications

1. Procédé de réalisation d'un traitement de déconvolution sur une carte de caractéristiques en utilisant un matériel de convolution dédié, le matériel de convolution dédié comprenant un réseau de multiplication-addition et une mémoire sur puce, le procédé comprenant :
la lecture de la carte de caractéristiques et d'un noyau de déconvolution dans la mémoire sur puce, et la réalisation d'un traitement de remplissage avec des zéros sur la carte de caractéristiques (S110) ;
la réalisation d'un traitement de convolution sur chaque noyau de convolution optimisé et la carte de caractéristiques optimisée correspondante en utilisant le réseau de multiplication-addition, pour obtenir une pluralité de sorties de convolution (S140) ; et
la réalisation d'un traitement de synthèse par entrelacement sur la pluralité de sorties de convolution, pour obtenir une sortie de synthèse par entrelacement (S150),
**caractérisé en ce que** le procédé comprend en outre : la détermination d'une pluralité de noyaux de convolution sur la base du noyau de déconvolution (S120) ;
la suppression, dans chaque noyau de convolution, d'une ligne et/ou colonne dont tous les éléments sont des poids invalides à valeur nulle pour obtenir un noyau de convolution optimisé, et la suppression d'une ligne et/ou colonne correspondante dans une carte de caractéristiques remplie avec des zéros pour obtenir une carte de caractéristiques optimisée correspondant à chaque noyau de convolution optimisé (S130) ;
dans lequel la détermination d'une pluralité de noyaux de convolution sur la base du noyau de déconvolution (S120) comprend :
la détermination d'une quantité et de dimensions de noyaux de convolution correspondant au noyau de déconvolution, dans lequel la quantité des noyaux de convolution est égale à un produit d'un pas dans une direction de hauteur et d'un pas dans une direction de largeur qui sont utilisés pour l'opération de déconvolution, une dimension de hauteur du noyau de convolution est une fonction d'une dimension de hauteur du noyau de déconvolution et du pas dans la direction de hauteur et d'un paramètre de remplissage avec des zéros dans la direction de hauteur qui sont utilisés pour l'opération de déconvolution, et une dimension de largeur du noyau de convolution est une fonction d'une dimension de largeur du noyau de déconvolution et du pas dans la direction de largeur et d'un paramètre de remplissage avec des zéros dans la direction de largeur qui sont utilisés pour l'opération de déconvolution ; et
pour chaque position dans chaque noyau de convolution, la détermination de valeurs de coordonnées bidimensionnelles d'une position correspondante dans le noyau de déconvolution sur la base d'indices bidimensionnels dans la direction de hauteur et la direction de largeur du noyau de convolution, de la dimension de hauteur et de la dimension de largeur du noyau de convolution, de valeurs de coordonnées bidimensionnelles de la position, et du pas dans la direction de hauteur, du pas dans la direction de largeur, du paramètre de remplissage avec des zéros dans la direction de hauteur, et du paramètre de remplissage avec des zéros dans la direction de largeur qui sont utilisés pour l'opération de déconvolution, et la prise d'une valeur de poids de la position correspondante comme une valeur de poids de la position dans le noyau de convolution,
dans lequel, lorsque les valeurs de coordonnées bidimensionnelles déterminées de la position correspondante dans le noyau de déconvolution dépassent une plage d'une coordonnée de position dans le noyau de déconvolution, un poids dans la position du noyau de convolution est déterminé comme étant un poids invalide à valeur nulle.

2. Procédé selon la revendication 1, dans lequel une quantité de multiplicateurs compris dans le réseau de multiplication-addition est supérieure ou égale à une quantité de valeurs de poids comprises dans chaque noyau de convolution optimisé.

3. Procédé selon la revendication 1, dans lequel la réalisation du traitement de remplissage avec des zéros sur la carte de caractéristiques comprend :
la détermination d'une quantité côté supérieur pour le remplissage avec des zéros et d'une quantité côté inférieur pour le remplissage avec des zéros de la carte de caractéristiques sur la base d'une dimension de hauteur du noyau de déconvolution et d'un pas dans une direction de hauteur et d'un paramètre de remplissage avec des zéros dans la direction de hauteur qui sont utilisés pour l'opération de déconvolution, dans lequel la quantité côté inférieur pour le remplissage avec des zéros correspond à une ligne de plus que la quantité côté supérieur pour le remplissage avec des zéros ; et
la détermination d'une quantité côté gauche pour le remplissage avec des zéros et d'une quantité côté droit pour le remplissage avec des zéros de la carte de caractéristiques sur la base d'une dimension de largeur du noyau de déconvolution et d'un pas dans une direction de largeur et d'un paramètre de remplissage avec des zéros dans la direction de largeur qui sont utilisés pour l'opération de déconvolution, dans lequel la quantité côté droit pour le remplissage avec des zéros correspond à une colonne de plus que la quantité côté gauche pour le remplissage avec des zéros.

4. Procédé selon la revendication 1, dans lequel la réalisation du traitement de synthèse par entrelacement sur la pluralité de sorties de convolution comprend :
le remplissage de tous les éléments dans chaque sortie de convolution dans une matrice de synthèse en prenant le pas dans la direction de hauteur et le pas dans la direction de largeur qui sont utilisés pour l'opération de déconvolution comme pas de remplissage, et en prenant les indices bidimensionnels dans la direction de hauteur et la direction de largeur du noyau de convolution comme décalages de remplissage.

5. Procédé selon la revendication 1, dans lequel, après la réalisation du traitement de synthèse par entrelacement sur la pluralité de sorties de convolution, pour obtenir une sortie de synthèse par entrelacement, le procédé comprend en outre :
l'adaptation de la sortie de synthèse par entrelacement, pour obtenir la sortie de déconvolution correspondant à la carte de caractéristiques et au noyau de déconvolution (S160).

6. Procédé selon la revendication 5, dans lequel l'adaptation de la sortie de synthèse par entrelacement comprend :
l'adaptation de côtés droit et inférieur de la sortie de synthèse par entrelacement, jusqu'à ce qu'une dimension de la sortie de synthèse par entrelacement après adaptation corresponde à une dimension de la sortie de déconvolution correspondant à la carte de caractéristiques et au noyau de déconvolution.

7. Appareil (200) pour la réalisation d'un traitement de déconvolution sur une carte de caractéristiques en utilisant un matériel de convolution dédié, le matériel de convolution dédié comprenant un réseau de multiplication-addition et une mémoire sur puce, l'appareil comprenant :
un module de lecture (210), configuré pour lire la carte de caractéristiques et un noyau de déconvolution dans la mémoire sur puce ;
un module de remplissage avec des zéros (220), configuré pour réaliser un traitement de remplissage avec des zéros sur la carte de caractéristiques ;
un module de convolution (250), configuré pour réaliser un traitement de convolution sur chaque noyau de convolution optimisé et la carte de caractéristiques optimisée correspondante en utilisant le réseau de multiplication-addition, pour obtenir une pluralité de sorties de convolution ; et
un module de synthèse par entrelacement (260), configuré pour réaliser un traitement de synthèse par entrelacement sur la pluralité de sorties de convolution, pour obtenir une sortie de synthèse par entrelacement,
**caractérisé en ce que** l'appareil comprend en outre un module de génération de noyaux de convolution (230), configuré pour générer une pluralité de noyaux de convolution sur la base du noyau de déconvolution ; et
un module d'optimisation (240), configuré pour supprimer, dans chaque noyau de convolution, une ligne et/ou colonne dont tous les éléments sont des poids invalides à valeur nulle pour obtenir un noyau de convolution optimisé, et supprimer une ligne et/ou colonne correspondante dans une carte de caractéristiques remplie avec des zéros pour obtenir une carte de caractéristiques optimisée correspondant à chaque noyau de convolution optimisé,
dans lequel le module de génération de noyaux de convolution (230) est configuré pour
déterminer une quantité et des dimensions de noyaux de convolution correspondant au noyau de déconvolution, dans lequel la quantité des noyaux de convolution est égale à un produit d'un pas dans une direction de hauteur et d'un pas dans une direction de largeur qui sont utilisés pour l'opération de déconvolution, une dimension de hauteur du noyau de convolution est une fonction d'une dimension de hauteur du noyau de déconvolution et du pas dans la direction de hauteur et d'un paramètre de remplissage avec des zéros dans la direction de hauteur qui sont utilisés pour l'opération de déconvolution, et une dimension de largeur du noyau de convolution est une fonction d'une dimension de largeur du noyau de déconvolution et du pas dans la direction de largeur et d'un paramètre de remplissage avec des zéros dans la direction de largeur qui sont utilisés pour l'opération de déconvolution ; et
pour chaque position dans chaque noyau de convolution, déterminer des valeurs de coordonnées bidimensionnelles d'une position correspondante dans le noyau de déconvolution sur la base d'indices bidimensionnels dans la direction de hauteur et la direction de largeur du noyau de convolution, de la dimension de hauteur et de la dimension de largeur du noyau de convolution, de valeurs de coordonnées bidimensionnelles de la position, et du pas dans la direction de hauteur, du pas dans la direction de largeur, du paramètre de remplissage avec des zéros dans la direction de hauteur, et du paramètre de remplissage avec des zéros dans la direction de largeur qui sont utilisés pour l'opération de déconvolution, et la prise d'une valeur de poids de la position correspondante comme une valeur de poids de la position dans le noyau de convolution,
dans lequel, lorsque les valeurs de coordonnées bidimensionnelles déterminées de la position correspondante dans le noyau de déconvolution dépassent une plage d'une coordonnée de position dans le noyau de déconvolution, un poids dans la position du noyau de convolution est déterminé comme étant un poids invalide à valeur nulle.

8. Appareil selon la revendication 7, dans lequel une quantité de multiplicateurs compris dans le réseau de multiplication-addition est supérieure ou égale à une quantité de valeurs de poids comprises dans chaque noyau de convolution optimisé.

9. Appareil selon la revendication 7, dans lequel le module de remplissage avec des zéros est configuré pour :
déterminer une quantité côté supérieur pour le remplissage avec des zéros et une quantité côté inférieur pour le remplissage avec des zéros de la carte de caractéristiques sur la base d'une dimension de hauteur du noyau de déconvolution et d'un pas dans une direction de hauteur et d'un paramètre de remplissage avec des zéros dans la direction de hauteur qui sont utilisés pour l'opération de déconvolution, dans lequel la quantité côté inférieur pour le remplissage avec des zéros correspond à une ligne de plus que la quantité côté supérieur pour le remplissage avec des zéros ; et
déterminer une quantité côté gauche pour le remplissage avec des zéros et une quantité côté droit pour le remplissage avec des zéros de la carte de caractéristiques sur la base d'une dimension de largeur du noyau de déconvolution et d'un pas dans une direction de largeur et d'un paramètre de remplissage avec des zéros dans la direction de largeur qui sont utilisés pour l'opération de déconvolution, dans lequel la quantité côté droit pour le remplissage avec des zéros correspond à une colonne de plus que la quantité côté gauche pour le remplissage avec des zéros.

10. Appareil selon la revendication 7, dans lequel le module de synthèse par entrelacement est configuré pour
remplir tous les éléments dans chaque sortie de convolution dans une matrice de synthèse en prenant le pas dans la direction de hauteur et le pas dans la direction de largeur qui sont utilisés pour l'opération de déconvolution comme pas de remplissage, et
prendre les indices bidimensionnels dans la direction de hauteur et la direction de largeur du noyau de convolution comme décalages de remplissage.

11. Appareil selon la revendication 7, dans lequel l'appareil comprend en outre un module d'adaptation configuré pour adapter la sortie de synthèse par entrelacement, pour obtenir la sortie de déconvolution correspondant à la carte de caractéristiques et au noyau de déconvolution.

12. Support de stockage lisible par ordinateur, stockant des instructions de programme informatique, **caractérisé en ce que**
lorsque les instructions de programme informatique sont exécutées par un dispositif électronique, le dispositif électronique amène le dispositif électronique à réaliser le procédé selon l'une quelconque des revendications 1 à 6 ; et le dispositif électronique comprend en outre un matériel de convolution dédié, le matériel de convolution dédié comprenant un réseau de multiplication-addition et une mémoire sur puce.
